(19) Europäisches Patentamt
European Patent Office
Office européen des brevets

(11) **EP 2 368 161 B1**

(12) **FASCICULE DE BREVET EUROPEEN**

(45) Date de publication et mention
de la délivrance du brevet:
**09.11.2016 Bulletin 2016/45**

(21) Numéro de dépôt: **09797091.7**

(22) Date de dépôt: **26.11.2009**

(51) Int Cl.:
*G05B 17/02* *(2006.01)*      *G05B 23/02* *(2006.01)*

(86) Numéro de dépôt international:
**PCT/FR2009/052302**

(87) Numéro de publication internationale:
**WO 2010/061136 (03.06.2010 Gazette 2010/22)**

(54) **DETECTION D'ANOMALIE DANS UN MOTEUR D'AERONEF**

DETEKTION VON ANOMALIEN IN EINEM FLUGZEUGTRIEBWERK

DETECTION OF ANOMALIES IN AN AIRCRAFT ENGINE

(84) Etats contractants désignés:
**AT BE BG CH CY CZ DE DK EE ES FI FR GB GR
HR HU IE IS IT LI LT LU LV MC MK MT NL NO PL
PT RO SE SI SK SM TR**

(30) Priorité: **28.11.2008 FR 0858088**

(43) Date de publication de la demande:
**28.09.2011 Bulletin 2011/39**

(73) Titulaire: **Snecma**
**75015 Paris (FR)**

(72) Inventeurs:
• **LACAILLE, Jérôme**
**F-93110 Rosny Sous Bois (FR)**

• **NYA DJIKI, Rostand**
**F-77380 Combs-La-Ville (FR)**

(74) Mandataire: **Boura, Olivier et al**
**Cabinet Beau de Loménie**
**158, rue de l'Université**
**75340 Paris Cedex 07 (FR)**

(56) Documents cités:
**EP-A1- 1 705 542      EP-A2- 1 677 172
EP-A2- 1 926 001      EP-A2- 1 953 614
US-A1- 2005 222 747**

## Description

<u>Domaine de l'invention</u>

La présente invention se rapporte au domaine de surveillance d'un moteur d'aéronef. En particulier, l'invention concerne la détection d'anomalie d'un moyen de contrôle du moteur d'aéronef. Plus particulièrement, elle concerne la détection d'anomalie de fonctionnement d'un circuit de régulation des vannes stators sur les compresseurs d'un turboréacteur.

Dans de nombreuses industries, telles que l'aéronautique ou le spatial, on fait généralement appel à des outils de surveillance.

Cependant, la surveillance ou la détection d'anomalie d'un moteur d'aéronef est souvent réalisée par l'observation de manière indépendante et discontinue dans le temps d'un très grand nombre d'éléments du moteur.

Ces observations engendrent un très grand nombre de données qui réclament un important temps de calcul afin de les analyser.

De plus, il arrive qu'une anomalie soit signalée par erreur ou même qu'un élément du moteur soit en défaut sans que l'événement soit décelé par manque d'un indicateur pertinent surveillant de manière continue le bon fonctionnement de cet élément.

Le document US 2005/222747 A1 décrit un procédé et un système de surveillance d'un moteur d'aéronef basé sur un modèle du moteur et réalisée par l'observation d'un nombre d'éléments du moteur.

<u>Objet et résumé de l'invention</u>

La présente invention concerne un procédé de détection d'anomalie dans un moteur d'aéronef, comportant les étapes suivantes :

- définir un modèle de comportement d'un moyen de contrôle dudit moteur d'aéronef selon une régression temporelle modélisant le comportement dudit moyen de contrôle en fonction d'un jeu de données relatif audit moyen de contrôle comprenant des mesures des comportements passés et des mesures de commande et d'état dudit moyen de contrôle ;
- recalculer de manière continue ledit modèle de comportement pour chaque nouveau jeu de données ; et
- surveiller une évolution statistique dudit modèle de comportement pour détecter une anomalie de comportement dudit moyen de contrôle reflétant une anomalie de fonctionnement dudit moteur.

Ainsi, ce procédé permet d'utiliser un modèle grossier pour détecter avec un nombre minimal de mesures et un temps de calcul optimal, une anomalie de comportement du moteur. En particulier, en recalculant un modèle grossier du comportement du moyen de contrôle de manière successive avec très peu de mesures à chaque fois, et en suivant l'évolution du modèle dans le temps, on peut détecter par anticipation une dérive du moyen de contrôle.

Ce procédé comporte en outre les étapes suivantes :

- recueillir un jeu de données initial relatif audit moyen de contrôle ;
- décomposer ledit jeu de données initial en plusieurs intervalles homogènes représentant différents régimes de vols identifiés par des indicateurs de régime définis suivant des critères établis par expertise ; et
- définir un modèle de comportement de référence pour chaque régime de vol.

Ainsi, ce procédé prend en compte les conditions d'utilisation du moteur et intègre un outil d'analyse et de classification de phases de vol pour une exploitation en continu. De plus, pour un besoin de maintenance conditionnelle il suffit d'appliquer ce procédé lors de tests dont les conditions externes sont stabilisées et prédéfinies.

Ce procédé comporte aussi les étapes suivantes :

- recueillir au cours du temps un jeu de données courant relatif audit moyen de contrôle ;
- stocker dans un tampon de mémoire le contenu dudit jeu de données courant pour une période de temps prédéterminée ;
- calculer à partir dudit jeu de données courant une estimation des indicateurs de régime pour identifier un régime de vol courant spécifique à ladite période de temps prédéterminée ;
- calculer un modèle de comportement courant correspondant audit jeu de données courant et audit régime de vol courant ;
- estimer une distance de comportement entre ledit modèle de comportement courant et ledit modèle de comportement de référence correspondant audit régime de vol courant ; et

- détecter une anomalie de comportement dudit moyen de contrôle lorsque ladite distance de comportement est supérieure à un seuil de normalité prédéterminé.

Ainsi, une fois le modèle de comportement étalonné, il est facilement applicable en temps réel en focalisant l'attention sur le comportement d'un faible nombre d'éléments du moteur et en calculant la distance entre le modèle de référence et le modèle courant pour détecter une panne de fonctionnement du moteur. Bien entendu, la détection de la panne peut dans un second temps, faciliter sa localisation.

Selon un aspect de la présente invention, ledit modèle de comportement est un filtre rationnel dont la définition comporte les étapes suivantes :

- standardiser ledit jeu de données initial en retranchant un filtre passe-bas et en normalisant par rapport à une variance locale estimée pour chaque régime de vol ;
- définir une pluralité de formules mathématiques, chaque formule exprimant un vecteur de sortie à un instant présent y(t) représentant un comportement courant dudit moyen de contrôle en fonction des vecteurs de sortie à des instants précédents y(t-i) représentant des mesures de comportements antérieurs, et des vecteurs d'entrées comprenant un vecteur d'entrée à un instant présent x(t) et des vecteurs d'entrées à des instants précédents x(t-i), chaque vecteur d'entrée x étant construit par une concaténation desdites mesures de commande et d'état dudit moyen de contrôle ;

- définir selon ladite pluralité de formules mathématiques un filtre rationnel de référence pour chaque régime de vol ; et
- calculer selon ladite pluralité de formules mathématiques un filtre rationnel courant relatif audit jeu de données courant et audit régime de vol courant.

Ainsi, en modélisant le moyen de contrôle par un filtre rationnel, on obtient un très bon extrapoleur qui est très peu demandeur de temps de calcul et qui permet de détecter d'importantes variations de comportement à partir d'un modèle grossier.

Chaque formule mathématique de ladite pluralité de formules mathématiques peut correspondre à une équation linéaire entre lesdits vecteurs de sortie Y et d'entrée X décrite de manière analytique dans le domaine temporel par A(q)Y=B(q)X avec A(q) un polynôme réel de la forme $A(q)=+a_1 q^{-1}+a_2 q^{-2}+...+a_{ra} q^{-ra}$ et B(q) un polynôme réel dont chaque coefficient est un vecteur ligne de même dimension que le vecteur d'entrée x de la forme $B(q)=b_0+b_1 q^{-1}+b_2 q^{-2}+...+b_{rb} q^{-rb}$ avec $q^{-1}(x(t))=x(t-1)$.

Ainsi, le filtre rationnel peut être facilement identifié de manière unique par ses zéros et pôles dans le plan complexe. Ceci permet de facilement suivre l'évolution des états du modèle de comportement.

Selon une variante, le procédé comporte :

- extraire des zéros et pôles courants des polynômes associés audit filtre de rationnel courant correspondant audit régime de vol courant ;
- calculer suivant des critères d'expertise des indicateurs de normalités pour ledit régime de vol courant à partir desdits zéros et pôles courants et d'autres informations représentant un contexte d'acquisition relatif audit moyen de contrôle ; et
- détecter une anomalie de comportement dudit moyen de contrôle lorsqu'une distance entre lesdits indicateurs de normalités et un seuil de normalité correspondant est supérieure à une valeur prédéterminée.

Ainsi, à partir des caractéristiques uniques (zéros et pôles) de fractions rationnelles, on peut définir une distance qui permet de suivre facilement l'évolution statistique de ces caractéristiques afin de détecter une anomalie de comportement du moyen de contrôle.

Selon une autre variante, le procédé comporte :

- définir une distance selon une fonction adaptée à la dynamique dudit moyen de contrôle ; et
- détecter une anomalie de comportement dudit moyen de contrôle lorsque ladite distance entre le filtre rationnel de référence et le filtre rationnel courant est supérieure à une valeur prédéterminée.

Ainsi, on peut directement utiliser un critère plus général sans passer par les zéros et pôles pour détecter une anomalie de comportement du moyen de contrôle.

Selon un exemple de la présente invention, ledit moyen de contrôle correspond à un circuit de régulation qui actionne des vérins contrôlant des vannes stators sur un compresseur basse pression et un compresseur haute pression d'un turboréacteur permettant de modifier la géométrie desdits compresseurs en fonction du régime de vol et en ce que ledit jeu de données relatif audit circuit de régulation comprennent des données sur les positions des vérins et des données externes comprenant une première vitesse de rotation N1 d'un arbre dudit compresseur basse pression, une seconde vitesse de rotation N2 d'un arbre dudit compresseur haute pression, une pression P en aval des compresseurs, un débit W du carburant, et une commande u des vérins.

Ainsi, ce procédé permet de détecter par anticipation une dérive du circuit de régulation des vannes en observant l'évolution d'un très petit nombre de paramètres.

Selon cet exemple, le procédé comporte les étapes suivantes :

- définir un filtre autorégressif discret à régime stationnaire pour modéliser le comportement d'une variable de sortie à un instant présent $y(t)$ correspondant à la position courante des vérins en fonction des variables de sortie à des instants précédents $y(s; s<t)$ correspondant à des positions antérieures des vérins et des variables d'entrées $x(s)=(x_j(s); s\leq t)_{j=1\dots k}$ correspondant auxdites données externes à des instants présent et précédents, ledit filtre autorégressif s'exprimant dans un spectre fréquentiel $w$ par un filtre rationnel $(F_j(w))_{j=1\dots k}$ de fractions polynômiales de la forme :

$$F_j(w) = \frac{B_j(w)}{A(w)},$$

où $B_j(w)=b_{j,0}+b_{j,1}w+\cdots+b_{j,r_j}w^{r_j}$ et $A(w)=1-a_1w-\cdots-a_{r_0}w^{r_0}$ ;

- recueillir des données numériques initiales représentant des variables d'entrées et de sorties initiales $(x^0(s), y^0(s))$ mesurées et stockées pendant des phases de tests sur bancs ;
- identifier les régimes de vol à partir desdites données numériques initiales ;
- calculer pour chaque régime de vol, un ensemble optimal de rangs $r_j$ et $r_0$ desdites fractions polynômiales dudit filtre rationnel $(F_j(w))_{j=1\dots k}$ ; et
- calculer pour chaque régime de vol, un filtre rationnel de référence $\left(F_j^0(w)\right)_{j=1\cdots k}$.

Ceci permet de construire un modèle de comportement efficace et très facile à implémenter. De plus, la sélection d'un ensemble optimal de rangs optimise la vraisemblance du modèle de comportement et sa robustesse.

Le procédé comporte en outre les étapes suivantes :

- stocker au cours du temps des mesures numériques représentant des variables d'entrées et de sorties $(x(s), y(s))$ dans un tampon de mémoire pour former un échantillon de N mesures :

$$I_t = \left\{(x(s), y(s)); s \in [t-N+1,\cdots t]\right\};$$

- tester la stabilité dudit échantillon de N mesures ;
- identifier le régime de vol courant et estimer sa qualité de classification $Q_{FR} \in [0,1]$ ;
- estimer un filtre rationnel courant $(F_j(w))_{j=1\dots k}$ pour l'ensemble optimal de rangs associé audit régime de vol courant ;
- comparer ledit filtre rationnel courant $(F_j(w))_{j=1\dots k}$ au filtre rationnel de référence $\left(F_j^0(w)\right)_{j=1\cdots k}$ correspondant au même régime de vol ; et
- signaler une anomalie de comportement dudit circuit de régulation lorsqu'un écart entre ledit filtre rationnel courant $(F_j(w))_{j=1\dots k}$ et ledit filtre rationnel de référence $\left(F_j^0(w)\right)_{j=1\cdots k}$ est supérieur à une valeur prédéterminée.

Ceci permet de détecter une anomalie du moteur simplement en observant les variations des positions des vérins en fonction de conditions externes et des entrées de commande des vannes.

Selon un aspect du procédé de la présente invention, la comparaison entre lesdits filtres rationnels courant $(F_j(w))_{j=1\dots k}$ et de référence $\left(F_j^0(w)\right)_{j=1\cdots k}$ comporte les étapes suivantes :

- calculer une erreur quadratique moyenne de référence $MSE_0$ entre une variable de sortie représentant une position réelle des vérins mesurée lors des phases de tests sur bancs et une variable de sortie correspondante représentant une position des vérins estimée par ledit filtre rationnel de référence $\left(F_j^0(w)\right)_{j=1\cdots k}$ ;

- calculer une erreur quadratique moyenne courante *MSE* entre une variable de sortie courante représentant une position réelle des vérins mesurée lors des mesures en temps réel et une variable de sortie correspondante représentant une position des vérins estimée par ledit filtre rationnel courant $(F_j(w))_{j=1\ldots k}$ ;
- calculer un écart défini par un rapport $e_0$ entre ladite erreur quadratique moyenne courante *MSE* et ladite erreur quadratique moyenne de référence $MSE_0$ :

$$e_0 = \frac{MSE}{MSE_0} \; ;$$

et

- signaler une anomalie lorsque ledit rapport $e_0$ est supérieur à une valeur prédéterminée.

Selon un autre aspect du procédé de la présente invention, la comparaison entre lesdits filtres rationnels courant $(F_j(w))_{j=1\ldots k}$ et de référence $\left(F_j^0(w)\right)_{j=1\cdots k}$ comporte les étapes suivantes :

- calculer une suite $e=(e_j)_{j=1\ldots k}$ d'indicateurs locaux $e_j$ par une intégration pondérée par lesdits filtres rationnels courant $(F_j(w))_{j=1\ldots k}$ et de référence $\left(F_j^0(w)\right)_{j=1\cdots k}$ sur une largeur de bande de fréquences de chaque variable d'entrée $x_j(t)$ :

$$e_j = \frac{1}{2\pi} \int \left(F_j(w) - F_j^0(w)\right) \left|X_j(w)\right|^2 dw \text{ avec } \left|X_j(w)\right|^2 = \int R_{jj}(\tau)e^{-iw\tau}d\tau$$

et

$$R_{jj}(\tau) = E\left[x_j(t), x_j(t-\tau)\right] \; ;$$

- calculer une suite $z=(z_j)_{j=1\ldots k}$ de scores locaux $z_j=e_j-\hat{e}_j$ selon une technique de corrélation entre lesdits indicateurs locaux $e_j$,
  où $\hat{e}_j$ est un estimateur entre un indicateur local $e_j$ et les autres indicateurs locaux :

$$\hat{e}_j = E\left[e_j / e_i \; ; i \neq j\right] \approx c_{j,0} + \sum_{i \neq j} c_{j,i} e_i \text{ avec } c_{j,i} \text{ des coefficients de régression ;}$$

- calculer un score global $Z^2$ selon une distance de Mahalanobis :

  $Z^2=(z-\bar{z})^T \Sigma^{-1}(z-\bar{z})$, où $\bar{z}$ est une moyenne de z calculée pendant les phases de tests sur bancs avec une matrice de covariance $\Sigma$ ;

- calculer un score final $Q_{FR}\times Z^2$ en multipliant le score globale $Z^2$ par le facteur de qualité de classification du régime de vol $Q_{FR} \in [0,1]$ ; et
- signaler une alerte d'anomalie de comportement lorsque la valeur du score final $Q_{FR}\times Z^2$ dépasse une valeur prédéterminée.

L'invention vise également un système de détection d'anomalie dans un moteur d'aéronef comportant :

- des moyens pour définir un modèle de comportement d'un moyen de contrôle dudit moteur d'aéronef selon une régression temporelle modélisant le comportement dudit moyen de contrôle en fonction d'un jeu de données relatif audit moyen de contrôle comprenant des mesures des comportements passés et des mesures de commande et d'état dudit moyen de contrôle ;
- des moyens pour recalculer de manière continue ledit modèle de comportement pour chaque nouveau jeu de données ; et
- des moyens pour surveiller une évolution statistique dudit modèle de comportement pour détecter une anomalie de comportement dudit moyen de contrôle reflétant une anomalie de fonctionnement dudit moteur.

L'invention vise aussi un programme d'ordinateur comportant des instructions pour la mise en oeuvre du procédé de détection selon les étapes ci-dessus lorsqu'il est exécuté par des moyens de traitement.

Brève description des dessins

D'autres particularités et avantages du dispositif et du procédé selon l'invention ressortiront mieux à la lecture de la description faite ci-après, à titre indicatif mais non limitatif, en référence aux dessins annexés sur lesquels :

- la figure 1 est une vue en perspective des moyens matériels mis en oeuvre dans le système ou procédé qui peut être utilisé pour la détection d'anomalie dans un moteur d'aéronef selon l'invention ;
- la figure 2 est un organigramme illustrant les étapes principales de détection d'anomalie du moteur d'aéronef de la figure 1 ;
- la figure 3 illustre de manière schématique un exemple de régimes de vols du moteur d'aéronef de la figure 1 ;
- la figure 4 est un organigramme illustrant les étapes principales pour la modélisation du comportement d'un moyen de contrôle du moteur d'aéronef par un filtre rationnel selon l'invention ;
- la figure 5 illustre très schématiquement un exemple d'un système de détection d'un circuit de régulation du moteur d'aéronef selon l'invention ; et
- les figures 6A et 6B illustrent les étapes principales pour la modélisation du comportement du circuit de régulation de la figure 5.

Description détaillée de modes de réalisation

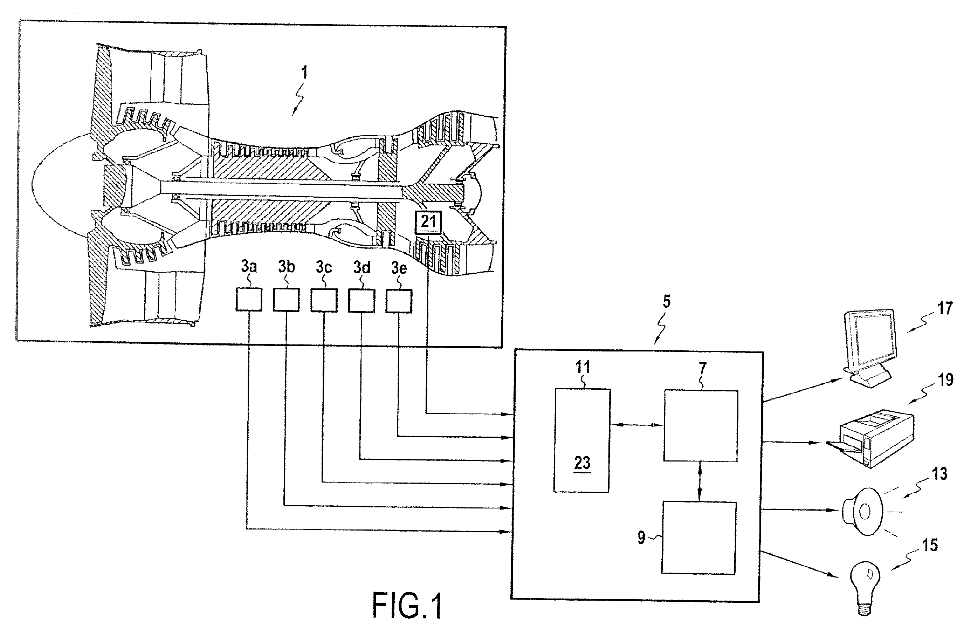

La figure 1 illustre des moyens matériels mis en oeuvre dans le système ou procédé de détection d'anomalie dans un turboréacteur ou moteur d'aéronef 1 selon l'invention. Ce système comprend plusieurs capteurs 3a-3e pour mesurer des signaux de commande ou des données reflétant l'état du moteur 1 ainsi que des données de contexte externes ou internes pouvant affecter le fonctionnement du moteur 1. Le système comprend aussi des moyens de traitement 5 de l'information tel un calculateur ou ordinateur pouvant être utilisé pour l'exécution d'un programme informatique conçu pour mettre en oeuvre le procédé selon l'invention. Les moyens de traitement 5 comprennent les moyens matériels que l'on trouve habituellement dans un ordinateur. Plus particulièrement, ces moyens de traitement 5 comprennent une unité centrale 7 qui exécute les séquences d'instructions du programme selon le procédé de l'invention, une mémoire centrale 9 qui stocke les données et programmes en cours d'exécution, des supports ou moyens de stockage 11 de données numériques conservant les données, des périphériques d'entrées (capteurs 3a-3e, clavier, souris, ...) ainsi que des périphériques de sorties (émetteurs de son 13, signaux lumineux 15, écran 17, imprimante 19,...) pour percevoir le résultat de la détection.

L'invention repose sur la détection d'une anomalie de comportement du moteur 1 et en particulier la détection d'une anomalie de comportement d'un moyen de contrôle 21 ou de régulation du moteur 1 qui reflète une anomalie de fonctionnement de ce moteur 1.

Conformément à l'invention, les moyens de traitement 5 sont configurés pour définir un modèle de comportement d'un moyen de contrôle 21 du moteur d'aéronef 1 selon une régression temporelle. Le comportement du moyen de contrôle 21 peut être modélisé en fonction d'un jeu de données relatif à ce moyen de contrôle 21, comprenant des mesures de comportements passés et des mesures de commande et/ou d'état de ce moyen de contrôle 21.

En outre, les moyens de traitement 5 sont configurés pour recalculer de manière continue ce modèle de comportement pour chaque nouveau jeu de données et pour surveiller une évolution statistique de ce modèle de comportement afin de détecter une anomalie de comportement du moyen de contrôle 21. En particulier, pour faciliter le calcul, il est avantageux d'exprimer le comportement temporel du moyen de contrôle 21 par un modèle discret régressif selon une formulation stochastique stationnaire.

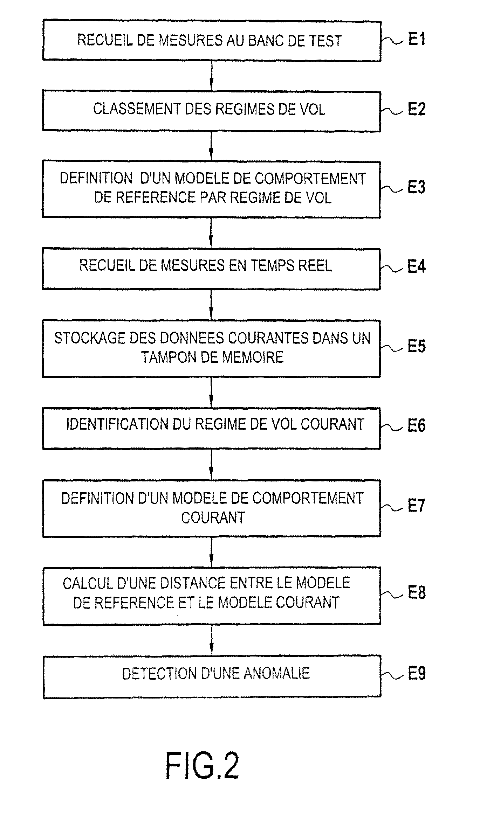

La figure 2 illustre les étapes principales du procédé de détection d'anomalie du moteur d'aéronef 1 selon l'invention. On notera que ces étapes sont implémentées par les moyens de traitement 5 du système de détection selon l'invention.

Les étapes E1 à E3 concernent la définition du modèle de comportement en fonction des mesures de comportements passés et des mesures de commande et d'état du moyen de contrôle 21.

Les étapes E4 à E7 concernent le recalcul dans le temps du modèle de comportement pour chaque nouvelle mesure.

Les étapes E8 et E9 concernent la mesure de l'évolution du modèle de comportement permettant la détection d'une anomalie du moyen de contrôle 21.

En particulier, à l'étape E1, les moyens de traitement 5 sont configurés pour recueillir un jeu de données initial relatif au moyen de contrôle 21 et correspondant à des données mesurées et stockées dans les supports de stockage 11 pendant des phases de test sur banc.

A l'étape E2, les moyens de traitement 5 sont configurés pour décomposer ce jeu de données initial en une pluralité d'intervalles homogènes représentant des intervalles similaires à ceux observés pendant des régimes de vols réels. Les différents régimes de vol peuvent être identifiés par une pluralité d'indicateurs de régimes définis suivant des critères établis par expertise.

En effet, cette sélection ou décomposition peut être réalisée selon la définition des experts qui proposent des indicateurs probabilistes pour chacune de ces phases. Ainsi, ces indicateurs donnent une indication de la probabilité d'être dans un régime de vol donné pour chacun des régimes identifiés. Le régime de vol FR (Flight Régime) le plus probable peut alors être accepté suivant un critère ou facteur de qualité de classification $Q_{FR} \in [0,1]$ défini par un seuil de probabilité sur les indicateurs.

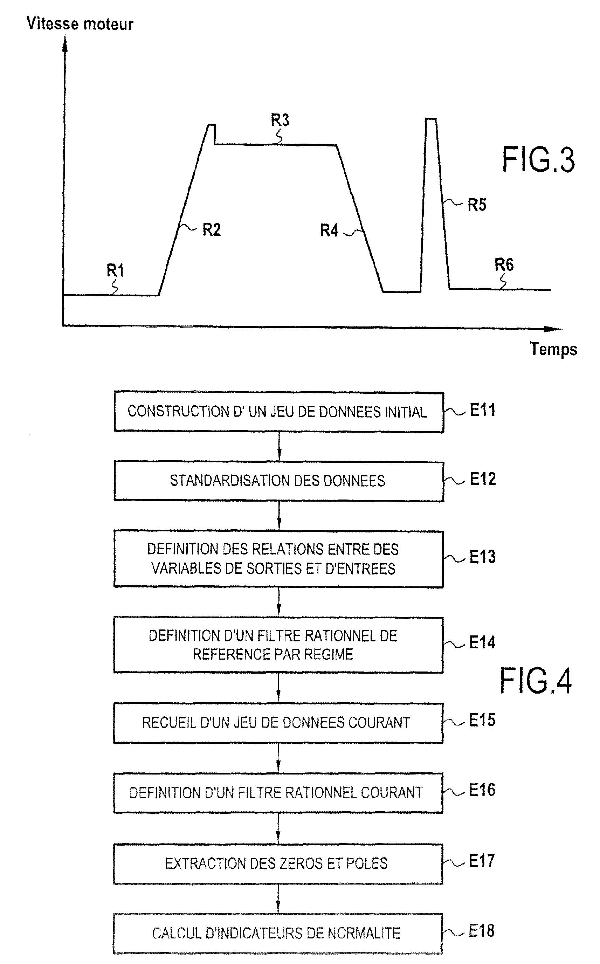

La figure 3 illustre de manière schématique un exemple de régimes de vols définis en fonction de la rotation du moteur. Selon, cet exemple, les régimes de vol stables comprennent des phases de ralenti au sol R1, R6 (ground-idle) et une phase de croisière R3. Les phases ou intervalles stationnaires sont définis par des mesures quasi-stationnaires de la rotation du moteur. Les phases de transition telles qu'une accélération lors d'un décollage R2, une décélération lors d'une descente R4, ou une marche arrière R5 ne sont pas des phases stationnaires et ne peuvent donc pas être utilisées pour modéliser un processus stochastique stationnaire.

Par ailleurs, les régimes de vol peuvent être essentiellement identifiés par trois indicateurs de régime: une durée minimale de l'intervalle, une valeur de référence indiquant l'appartenance de l'intervalle à une classe spécifique du régime de vol, et une valeur de tolérance. On notera qu'étant donné que cette classification est essentiellement réalisée au sol, il n'est pas nécessaire d'inclure d'autres paramètres tels que l'altitude ou l'attitude de l'avion.

A l'étape E3, les moyens de traitement 5 sont configurés pour définir un modèle de comportement de référence pour chaque régime de vol permettant de prédire le comportement du moyen de contrôle 21 en fonction des comportements passés et d'autres mesures présentes et passées.

Ensuite, les modèles de comportement de référence sont appliqués en temps réel.

Ainsi, à l'étape E4 les moyens de traitement 5 commencent par recueillir au cours du temps un jeu de données courant relatif au moyen de contrôle 21. Ces données sont par exemple issues des différents capteurs 3a-3e de l'environnement du moteur 1.

A l'étape E5, les moyens de traitement 5 sont configurés pour stocker le contenu du jeu de données courant pour une période de temps prédéterminée dans un tampon de mémoire 23 compris par exemple dans les moyens de stockage 11.

A l'étape E6, les moyens de traitement 5 sont configurés pour calculer à partir du jeu de données courant une estimation des indicateurs de régime pour identifier le régime de vol courant spécifique à la période de temps prédéterminée. Si le régime de vol courant est identifié, on passe à l'étape suivante E7, sinon, on continue à acquérir de nouvelles données.

Quand un régime de vol courant est identifié, les moyens de traitement 5 sont configurés pour calculer alors à l'étape E7, un modèle de comportement courant correspondant au jeu de données courant et au régime de vol courant. Le calcul du modèle de comportement courant est réalisé selon la définition de l'étape E3 relatif au modèle de comportement de référence correspondant au même régime de vol.

A l'étape E8, les moyens de traitement 5 sont configurés pour estimer une distance de comportement entre le modèle de comportement courant et le modèle de comportement de référence correspondant au même régime de vol.

Alors, à l'étape E9, les moyens de traitement 5 sont configurés pour détecter une anomalie de comportement du moyen de contrôle 21 lorsque la distance de comportement est supérieure à un seuil de normalité prédéterminé.

A titre d'exemple, le comportement du moyen de contrôle 21 peut être modélisé par un filtre rationnel basé sur des fonctions rationnelles non linéaires ou linéaires. En particulier, le filtre rationnel peut être très performant pour modéliser un processus stationnaire autorégressif.

La figure 4 illustre les étapes principales pour la modélisation du comportement du moyen de contrôle 21 par un filtre rationnel.

A l'étape E11, les moyens de traitement 5 sont configurés pour construire le jeu de données initial correspondant aux données numériques mesurées et stockées pendant les phases de test sur banc du moyen de contrôle 21 pour chaque régime de vol afin de réaliser un étalonnage du filtre rationnel.

A l'étape E12, les moyens de traitement 5 sont configurés pour standardiser ces données numériques en retranchant un filtre passe-bas et en normalisant par rapport à une variance locale estimée pour chaque régime de vol.

A l'étape E13, les moyens de traitement 5 sont configurés pour définir une pluralité de formules mathématiques. Chaque formule peut par exemple, exprimer un vecteur de sortie y(t) à un instant présent t représentant le comportement courant du moyen de contrôle 21 en fonction des vecteurs de sortie y(t-i) à des instants précédents (c'est-à-dire à des instant t-1,..., t-i,...0) représentant les mesures de comportements antérieurs, et des vecteurs d'entrées comprenant un vecteur d'entrée courant à un instant présent x(t) et des vecteurs d'entrées x(t-i) à des instants précédents. Chaque vecteur d'entrée x (courant ou précédent) peut être construit par une concaténation des mesures de commande et d'état (courant ou antérieurs) du moyen de contrôle 21.

A titre d'exemple, chaque formule mathématique peut correspondre à une relation entre les vecteurs de sortie *y* et d'entrée *x* décrite de manière analytique dans le domaine temporel par une équation linéaire de la forme :

$$A(q)y = B(q)x$$

avec A($q$) un polynôme réel dont le terme de plus haut degré est égal à 1, de la forme $A(q)=1+a_1q^{-1}+a_2q^{-2}+\cdots+a_{ra}q^{-ra}$ et *B*($q$) un polynôme réel dont chaque coefficient est un vecteur ligne de même dimension que le vecteur d'entrée *x,* de la forme $B(q)=b_0+b_1q^{-1}+b_2q^{-2}+\cdots+b_{rb}q^{-rb}$, avec $q^{-1}$ un opérateur de retard défini par $q^{-1}(x(t)=x(t-1))$. Ces polynômes peuvent être identifiés de manière unique par leurs racines (zéros et pôles) dans le plan complexe.

A l'étape E14, les moyens de traitement 5 sont configurés pour définir selon la pluralité de formules mathématiques, un filtre rationnel de référence (correspondant au modèle de comportement de référence) pour chaque régime de vol.

La première étape d'étalonnage du filtre rationnel consiste à définir les rangs des polynômes *A*($q$) et *B*($q$) . Une valeur doit être choisie pour le degré du polynôme A($q$), mais aussi pour le degré de chaque polynôme défini par *B*($q$) et chacune des variables suivies.

Comme la vraisemblance d'un modèle augmente naturellement avec le nombre de paramètres utilisés par le modèle, il est alors avantageux d'utiliser un critère de compensation permettant de contrôler efficacement la qualité du modèle estimé et sa robustesse.

Les coefficients des polynômes peuvent être calculés par une technique d'interpolation et de prédiction classique par régression des valeurs mesurées durant la procédure de modélisation satisfaisant les équations autorégressives. Pour la sélection des rangs, ces techniques régressives sont appliquées sur un fort volume de données permettant à la fois d'estimer les coefficients des polynômes, d'estimer la vraisemblance de compensation, et de tester la robustesse du modèle de comportement. Ce dernier évalue la qualité de la modélisation sur des données non utilisées par l'estimation des coefficients du modèle de comportement.

Les rangs retenus des équations linéaires autorégressives sont ceux qui optimisent la vraisemblance du modèle de comportement et sa robustesse suivant des critères établis par expertise.

Une fois, le filtre rationnel étalonné, il est applicable en temps réel. Ainsi, à l'étape E15, les moyens de traitement 5 sont configurés pour recueillir et stocker dans le tampon de mémoire 23 au cours du temps, le jeu de données courant relatif au moyen de contrôle 21.

Avantageusement, ce tampon de mémoire 23 est de taille fixe définie à l'aide de l'estimation des rangs retenus à l'étape précédente et du volume de données minimal nécessaire pour identifier un régime de vol et pour appliquer les techniques de régression nécessaires au calcul des coefficients des polynômes A(q) et *B(q)* . Le tampon de mémoire 23 peut fonctionner de manière glissante de sorte que les données les plus anciennes soient supprimées, laissant ainsi la place aux nouvelles mesures.

A chaque instant les indicateurs de régimes de vol sont estimés. Cette estimation doit conduire à l'acceptation d'un des régimes de vols durant l'ensemble de la période de mesures stockées dans le tampon de mémoire 23. Si un régime spécifique est identifié, on passe à l'étape suivante E16.

A l'étape E16, quand le régime courant est identifié, les moyens de traitement 5 sont configurés pour calculer selon la pluralité de formules mathématiques, un filtre rationnel courant (correspondant au modèle de comportement courant) relatif au jeu de données courant et au régime de vol courant.

Le choix ou calcul du filtre rationnel courant comporte une application de la standardisation correspondant au régime de vol courant et l'exécution de la technique d'apprentissage du modèle autorégressif. Ce calibrage s'effectue sur les données du tampon de mémoire 23 pour en déduire une expression des polynômes A($q$) et *B(q)* en utilisant une méthode d'adaptation des coefficients précédemment calculés pendant l'étalonnage au sol. Il est parfois possible que certains coefficients calculés ne soient pas fiables. Dans ce cas, on passe directement à l'étape suivante E17.

En effet, le filtre rationnel linéaire peut être défini par des indicateurs uniques (zéros et pôles) plus stables que les coefficients des polynômes.

A l'étape E17 les moyens de traitement 5 sont configurés pour extraire pour chaque régime de vol des zéros (racines de *B*($q$)) et pôles (racines de *A*($q$)) courants dans le plan complexe des polynômes *A*($q$) et *B*($q$) associés au filtre rationnel courant. Ces zéros et pôles courants, après un prétraitement permettant de ne conserver que des grandeurs réelles (par exemple, le module et la phase d'un couple de zéros complexes conjugués), sont enregistrés dans une table (stockée par exemple, dans les moyen de stockage 11) avec d'autres informations représentant le contexte d'acquisition relatif au moyen de contrôle 21 du moteur 1 (par exemple, température extérieure, pression, altitude de l'avion, etc.).

Les tables ainsi créées pour chaque régime de vol peuvent être utilisées par une procédure de calibrage (décrite plus loin) qui permet de définir la distribution de loi des coefficients conduisant à la définition de seuils de normalités (c'est-à-dire, de tests de rejet pour la normalité du moyen de contrôle 21) suivant par exemple, des critères d'expertise.

Le franchissement d'un de ces seuils de normalité par un indicateur de normalité calculé comme une vraisemblance sous hypothèse normale des pôles et zéros entraîne à l'émission d'une alerte d'anomalie. Une logique de décision peut alors être implémentée pour gérer l'apparition de ces événements et la gestion des alarmes.

On notera, qu'après avoir calculé et stocké les zéros et pôles du filtre rationnel au cours du temps pour un régime de vol spécifique, la procédure de calibrage consiste d'abord à appliquer un réajustement de chaque coefficient par régression sur les mesures contextuelles et sur les autres coefficients pour s'absoudre du contexte d'acquisition.

Ensuite, les écarts au filtre rationnel régressif sont modélisés par une estimation de la loi du vecteur des coefficients réajustés vus dans leur ensemble. Par exemple, on peut utiliser un T2 de Hottelling comme un modèle d'estimation de loi.

Les paramètres de ce modèle de loi sont estimés sur une série de données jugées normales par des experts. Les seuils de normalités sont définis comme des quantités sur cette loi. En définitive, ce modèle permet de séparer ce qui paraît comme un bruit habituel d'une modification du comportement du moyen de contrôle 21.

Ainsi, afin d'éventuellement détecter une anomalie pour un régime de vol courant, les moyens de traitement 5 sont configurés pour calculer à l'étape E18 suivant des critères d'expertise, des indicateurs de normalités à partir des zéros et pôles courants et d'autres informations représentant le contexte d'acquisition relatif au moyen de contrôle 21. Les moyens de traitement 5 peuvent alors détecter une anomalie de comportement du moyen de contrôle 21 lorsqu'une distance entre les indicateurs de normalités et un seuil de normalité correspondant est supérieure à une valeur prédéterminée.

On notera, qu'on peut aussi estimer une distance selon une fonction adaptée à la dynamique du moyen de contrôle 21 sans passer par les zéros et pôles en utilisant par exemple, une variation d'énergie résiduelle. Dans ce cas, on peut détecter une anomalie de comportement du moyen de contrôle 21 lorsque la distance entre le filtre rationnel de référence et le filtre rationnel courant est supérieure à une valeur prédéterminée.

Selon un exemple de la présente invention, le moyen de contrôle 21 correspond à un circuit de régulation qui actionne des vérins contrôlant des vannes stators sur des compresseurs d'un turboréacteur.

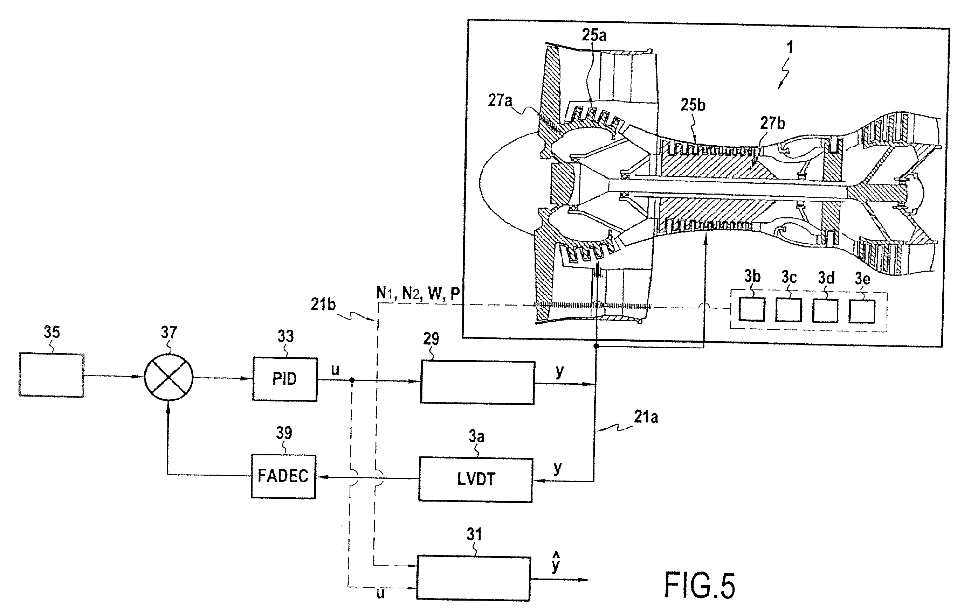

En effet, la figure 5 illustre très schématiquement un exemple du système de détection selon l'invention comportant un circuit de régulation 21a (représenté par des traits continus) et une boucle d'asservissement 21b (représentée par des traits discontinus) pour détecter une anomalie de fonctionnement des vannes stators 25a, 25b sur des compresseurs 27a, 27b axiaux d'un turboréacteur 1.

D'une manière générale, un turboréacteur 1 comporte un compresseur amont 27a basse pression BP et un compresseur aval 27b haute pression HP.

Par ailleurs, les vannes stators 25a, 25b permettent de modifier la géométrie d'un compresseur 27a, 27b en fonction du régime de vol, des conditions externes et des entrées de commandes. Elles sont contrôlées par le circuit de régulation 21a fermé qui actionne deux vérins 29 (par exemple, hydrauliques) couplés entre eux. Bien entendu, les vérins 29 peuvent aussi être électromécaniques ou électriques.

Ainsi, selon cet exemple, le moyen de contrôle 21 correspond au circuit de régulation 21a qui actionne les vérins 29 et qui est modélisé par la boucle d'asservissement 21b comprenant un filtre rationnel 31.

La position ou déplacement $y$ à la sortie des vérins 29 est mesurée par un capteur de position LVDT 3a (Linear Variable Differential Transfer). Les vérins 29 sont commandés par une commande d'entrée $u$ transmise par un régulateur PID 33 (Proportional Intégral Derivative).

La commande d'entrée $u$ est définie par une consigne 35 en fonction d'une demande de puissance de pilotage corrigée via un opérateur arithmétique 37 par une valeur de commande transmise par le contrôleur du moteur à régulation numérique pleine autorité FADEC 39 (Full Authority Digital Engin Control). Le FADEC 39 calcule la valeur de commande en fonction de la position de sortie $y$ des vérins mesurée par le capteur de position LVDT 3a.

Par ailleurs, en plus des mesures de commande $u$ et de position $y$ des vérins 29, le système comporte d'autres mesures concernant l'environnement du moteur 1. Ainsi, le système comporte des capteurs 3b-3e pour respectivement mesurer la vitesse de rotation $N1$ de l'arbre du compresseur à basse pression, la vitesse de rotation $N2$ de l'arbre du compresseur à haute pression, la pression P en aval des compresseurs, et le débit $W$ du carburant.

Ainsi, la boucle d'asservissement 21b montre que le filtre rationnel 31 modélise la position $\hat{y}$ des vérins (sortie du filtre 31) en fonction des données d'entrée comportant la position réelle $y$ des vérins, la commande d'entrée $u$, et les mesures externes issues de l'environnement du moteur comprenant les régimes $N1$ et $N2$ des compresseurs HP et BP, le débit $W$ de carburant et la pression d'air P.

On notera qu'en connaissant les paramètres suivants d'un vérin hydraulique : le volume $V$ du cylindre, l'aire $A$ du piston, la densité $\rho$ du fluide, le module de compressibilité $\kappa$ (bulk moduls) du fluide, la masse équivalente à la charge $m$, la rigidité de la charge $K$ (load stiffness) et l'amortissement c (damping), ainsi que quelques mesures de fuites (leakage) externe et interne L, il est alors possible de définir une relation entre la commande $u$ et la position y du vérin 29 par une formule analytique continue dans le temps t, de la manière suivante :

$$\left(\frac{\rho Vm}{\kappa A}\right)\frac{d^3 y}{dt^3} + \left(\frac{\rho Vc}{\kappa A} + \frac{Lm}{A}\right)\frac{d^2 y}{dt} + \left(A\rho + \frac{\rho VK}{\kappa A} + \frac{Lc}{A}\right)\frac{dy}{dt} + \left(\frac{LK}{A}\right)y = bu$$

Cette formulation temporelle entre la position $y$ du vérin 29 et la commande d'entrée $u$ du vérin 29 illustre le comportement du circuit de régulation 21b et peut être raisonnablement approximée par un filtre autorégressif discret à régime stationnaire. La régression numérique peut être exprimée par une équation stochastique discrète dans le temps de la manière suivante :

$$y(t) = \sum_{i=1}^{r_0} a_i y(t-i) + \sum_{j=1}^{k}\sum_{i=0}^{r_j} b_{j,i} x_j(t-i)$$

Les variables $x_j$ regroupent tous les k entrées externes comprenant la commande d'entrée $u$, les mesures de l'environnement du moteur 1, et éventuellement d'autres mesures du contexte relatives au circuit de régulation 21a. Cette équation discrète peut être exprimée de manière vectorielle de la forme $ay=bx$ en posant $a=(a_0=1, -a_i)_{i=1...r_0}$ et $b = \left(b_{j,i}\right)_{i=0\cdots r_j}^{j=1\cdots k}$. Les paramètres vectoriels $a$ et $b$ sont des paramètres d'état car ils décrivent la relation entre le contexte, la commande et la position.

Ainsi, le filtre autorégressif discret à régime stationnaire permet de modéliser le comportement d'une variable de sortie à un instant présent $y(t)$ correspondant à la position courante des vérins 29 en fonction des variables de sortie à des instants précédents $y(s; s < t)$ correspondant à des positions antérieures des vérins 29 et des variables d'entrées $x(s)=(x_j(s); s \leq t)_{j=1...k}$ correspondant aux données externes à des instants présent et précédents. Ce filtre autorégressif peut être exprimé dans un spectre fréquentiel $w$ par un filtre rationnel $(F_j(w))_{j=1...k}$ 31 de fractions polynômiales de la forme :

$$F_j(w) = \frac{B_j(w)}{A(w)},$$

où $B_j(w)=b_{j,0}+b_{j,1}w+\cdots+b_{j,r_j}w^{r_j}$ et $A(w)=1-a_1 w-\cdots-a_{r_0}w^{r_0}$.

Un bon critère pour tester l'adéquation du modèle correspond par exemple, à la mesure de l'erreur quadratique moyenne MSE (Mean Square Error) pour un nombre N d'échantillons entre la position réelle mesurée $y(t)$ des vérins 29 et la position estimée $\hat{y}(t)$ des vérins 29 par le filtre selon la formule suivante :

$$MSE = \frac{1}{N}\sum \left(y(t) - \hat{y}(t)\right)^2$$

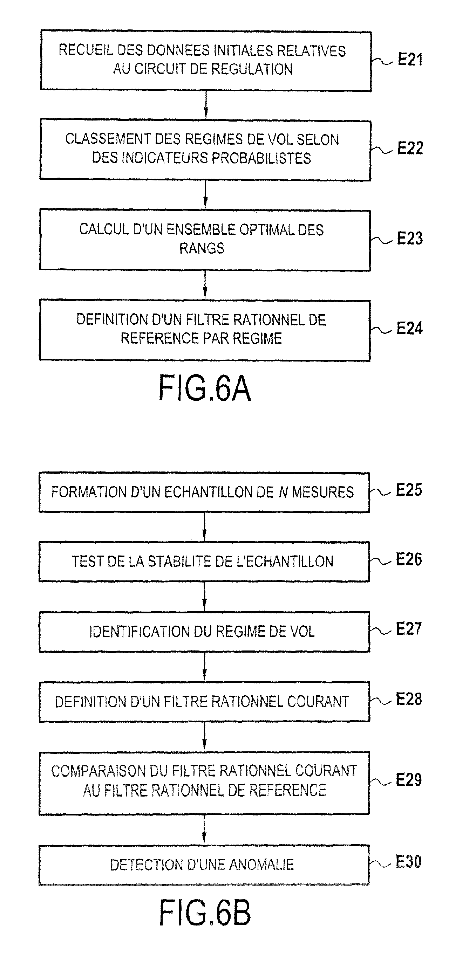

Les figures 6A et 6B illustrent les étapes principales pour la modélisation du comportement du circuit de régulation 21a par le filtre rationnel 31.

On notera que ces figures ainsi que les figures précédentes sont également des illustrations des principaux moyens du système de détection d'anomalie du moteur d'aéronef 1 selon l'invention.

Plus particulièrement, la figure 6A illustre l'étalonnage du filtre rationnel 31 pendant les mesures au sol.

A l'étape E21, les moyens de traitement 5 sont configurés pour surveiller le fonctionnement du moteur 1 afin de recueillir des données numériques initiales représentant des variables d'entrées et de sorties initiales $(x^0(s), y^0(s))$ mesurées et stockées pendant des phases de tests sur bancs.

Ces données numériques initiales vont servir à identifier ou classer les régimes de vol et à déterminer les paramètres des polynômes.

Ainsi, à l'étape E22, les moyens de traitement 5 sont configurés pour classer les régimes de vol selon les indicateurs probabilistes (proposés par les experts) de chacune de ces phases.

A l'étape E23, après le classement des régimes de vol, les moyens de traitement 5 sont configurés pour calculer par des techniques de régression, pour chaque régime de vol, un ensemble optimal de rangs $r_j$ et $r_0$ des fractions polynômiales associées au filtre rationnel $(F_j(w)_{j=1...k}$ 31. Ceci permet alors aux moyens de traitement 5 de définir à l'étape E24 pour chaque régime de vol, un filtre rationnel de référence $\left(F_j^0(w)\right)_{j=1\cdots k}$ qui permet de prédire la position de sortie des vérins 29 en fonction des positions antérieures et des autres mesures présente et passées.

Plus particulièrement (concernant les étapes E23 et E24), les données correspondantes à chaque régime de vol sont d'abord normalisées en utilisant des informations de contexte exogène comprenant par exemple, la vitesse moyenne de rotation.

Après la normalisation des données numériques, on peut construire le vecteur d'entrée $x=(N_1,N_2,P,W,u)$ par une concaténation de mesures comportant : les vitesses de rotation $N_1$ et $N_2$ des arbres des compresseurs, la pression $P$ en aval des compresseurs, le débit $W$ du carburant, et la commande $u$ des vannes. On notera que les mesures externes concernant les vitesses de rotation assurent plus de robustesse aux variations du contexte.

Ensuite, pour chaque régime de vol, on calcule les rangs par une optimisation du modèle selon un critère de vraisemblance maximale. On peut utiliser le critère d'information d'Akaike « AIC » (Akaike Information Criterion) qui est adéquat pour comparer des modèles de différentes tailles afin de trouver la taille optimale du modèle. Le critère AIC permet de compenser une log-vraisemblance log(L) de l'erreur quadratique moyenne MSE par le nombre de paramètres estimés $d$ selon les formules suivantes :

$$d = r_0 - 1 + \sum_{j=0}^{k} r_j \, , \ AIC = 2d - 2\log(L)$$

$$MSE = \frac{1}{N} \sum (y(t) - \hat{y}(t))^2 \ \text{et} \ \log(L) = -N(\log(2\pi MSE) + 1)$$

La minimisation du critère AIC correspond alors, à la minimisation de l'erreur quadratique moyenne MSE ainsi qu'à la minimisation du nombre de paramètres estimés.

Avantageusement, afin de définir un modèle robuste par rapport à des nouvelles données, on utilise un test de robustesse par vraisemblance compensée. Ce test évalue la qualité de la modélisation sur des données non utilisées pour l'étalonnage du modèle. Ainsi, pour tester un modèle d'un rang donné $r = (r_0,...r_k)$, où $r_0 \geq 1$ 1 et $r_j \geq 0$ sur un échantillon de taille N, on étalonne le modèle sur une première partie de l'échantillon (par exemple, sur 80% de la taille de l'échantillon) et on le test sur la partie restante.

Ce test de robustesse donne une vraisemblance spécifique à cette sélection de rangs dans laquelle l'erreur quadratique moyenne est calculée sur la partie du signal qui n'a pas été utilisée pour l'étalonnage. Par conséquent, on peut modifier le critère AIC de sorte que la normalisation soit appliquée sur l'échantillon de taille N afin de préserver une valeur constante et cohérente. Après la suppression des parties constantes, on obtient un critère $\alpha_\lambda(r)$ ajusté par un paramètre de régularisation $\lambda$ de la forme suivante :

$$\alpha_\lambda(r) = \log(MSE) + \lambda d$$

Par conséquent, pour sélectionner les rangs, on commence par $r_0 = (1,...,0)$ et on calcule le critère $\alpha_0 = \alpha_\lambda(r_0)$ qui est égal à $\log(\sigma^2) \approx 0$ car $y$ est normalisé ($\sigma=1$) et le signal est estimé par sa moyenne ($u = 0$). Ensuite pour chaque composante $j$ de $r$, on teste un nouvel ensemble de rangs en ajoutant un 1 au $j^{ème}$ rang. L'ensemble de rangs suivant $r_1$ correspond à celui qui minimise $\alpha(r)$. De la sorte, la suite $(\alpha_n)_{n=0}$ décroît jusqu'à ce qu'une valeur minimale soit obtenue qui correspond à la meilleure sélection de l'ensemble de rangs pour le filtre rationnel 31.

Après qu'on ait choisi un ensemble optimal de rangs, les paramètres du filtre 31 sont alors calculés par une méthode régressive classique en utilisant cette fois-ci la totalité du signal d'étalonnage. Ceci permet d'obtenir pour chaque régime de vol, le filtre rationnel de référence $\left( F_j^0(w) \right)_{j=1\cdots k}$ en fonction des polynômes de référence $A^0(w)$ et $B_j^0(w)$ :

$$F_j^0(w) = \frac{B_j^0(w)}{A^0(w)} \, .$$

On notera que la technique de régression temporelle permet de réaliser une estimation grossière de la position $y(t)$ des vérins. Avantageusement, le modèle peut être amélioré en stabilisant la méthode au voisinage d'un point fixe.

Cependant, une estimation grossière de ces paramètres est suffisante car il est plus intéressant de connaître les tendances des états que la qualité de la régression. De plus, un modèle précis peut facilement devenir sur-paramétré, conduisant à des réglages et changements rapides et brutaux du modèle de comportement à cause des variations non-locales.

La figure 6B illustre les étapes principales de surveillance de l'évolution du filtre rationnel.

En effet, après identification des régimes de vol, un nouveau filtre rationnel est calculé de manière périodique et un signal temporel multi-variable $(a(n), b(n))$ est accompli pour chaque régime de vol. L'indice temporel $n$ correspond à des observations périodiques $t(n)=t_0+n\Delta t$. L'indice temporel $n$ peut aussi représenter le numéro de vol pour une maintenance à long-terme. En pratique, pour chaque indice temporel $n$, une nouvelle estimation des paramètres est calculée pendant un intervalle de temps $I_{t(n)}$ autour de $t(n)$.

Ainsi, le but de la surveillance en fonctionnement du circuit de régulation 21a est la détection des anomalies du circuit en surveillant l'évolution des paramètres d'état $(a(n), b(n))$.

Plus particulièrement, après la définition des filtres de référence $F_j^0(w)$, les moyens de traitement 5 commencent par enregistrer les mesures au cours du temps $t(n)$ (qu'on notera souvent par $t$ pour plus de concision).

En effet, à l'étape E25 les mesures numériques représentant des variables d'entrée et de sortie $(x(s), y(s))$ sont stockées au cours du temps $t$ dans le tampon de mémoire 23 d'une capacité prédéterminée pour former un intervalle ou échantillon de N mesures :

$$I_t = \left\{ \left(x(s), y(s)\right) ; s \in \left[t-N+1, \cdots t\right] \right\}.$$

A l'étape E26, les moyens de traitement 5 sont configurés pour tester à chaque instant périodique $t(n) = n\Delta t$ (où $\Delta t$ est une durée prédéterminée qui dépend de la vitesse de calcul des moyens de traitement 5), la stabilité de l'échantillon de N mesures.

A l'étape E27, dans le cas où l'échantillon de N mesures est stable, les moyens de traitement 5 sont configurés pour identifier le régime de vol courant. En effet, en cas de stabilité, on identifie le régime de vol courant le plus probable et on estime sa qualité de classification $Q_{FR} \in [0,1]$.

A l'étape E28, les moyens de traitement 5 sont configurés pour estimer un filtre rationnel courant $(F_j(w))_{j=1\ldots k}$ pour l'ensemble optimal de rangs associé au régime de vol courant identifié à l'étape E27.

A l'étape E29, les moyens de traitement 5 sont configurés pour comparer le filtre rationnel courant $(F_j(w))_{j=1\ldots k}$ calculé à l'étape E28 au filtre rationnel de référence $\left(F_j^0(w)\right)_{j=1\cdots k}$ correspondant au même régime de vol calculé à l'étape E24.

A l'étape E30, les moyens de traitement 5 sont configurés pour signaler une anomalie de comportement du circuit de régulation 21a lorsqu'un écart entre le filtre rationnel courant $(F_j(w))_{j=1\ldots k}$ et le filtre rationnel de référence $\left(F_j^0(w)\right)_{j=1\cdots k}$ est supérieur à une valeur prédéterminée.

Un écart ou distance entre les deux filtres rationnels peut être calculé à partir des zéros et pôles des polynômes et éventuellement d'autres informations représentant le contexte d'acquisition relatif au circuit de régulation 21a.

En effet, les zéros (racines de $B_j$) et pôles (racines de $A$) sont des caractéristiques uniques des filtres rationnels. Ainsi, on peut suivre l'évolution statistique de ces racines pour pouvoir détecter une anomalie du comportement du circuit de régulation 21a. Quelques racines peuvent être complexes, mais tous les polynômes sont réels et alors, pour chaque racine complexe il existe une racine complexe conjuguée et ainsi on peut uniquement tenir compte des parties réelles et parties imaginaires positives. Les experts peuvent définir des indicateurs à partir des combinaisons particulières de ces racines permettant d'identifier des anomalies.

On notera qu'en absence de critères d'expertises, on peut aussi calculer les indicateurs de manière automatique.

On notera aussi que lorsqu'un polynôme est représenté par toutes ses racines, on peut maîtriser le comportement du circuit de régulation 21a sur tout le spectre des signaux d'entrées. Cependant, il peut être plus avantageux de maîtriser le comportement de la modélisation autour de quelques fréquences spécifiques qui ont une réelle signification.

Une première technique de comparaison entre le filtre rationnel courant $(F_j(w))_{j=1\ldots k}$ et le filtre rationnel de référence $\left(F_j^0(w)\right)_{j=1\cdots k}$ consiste à estimer un écart stochastique entre les deux filtres.

A titre d'exemple, les moyens de traitement 5 peuvent être configurés pour calculer l'erreur quadratique moyenne courante $MSE$ entre la position mesurée $y$ et la position estimée $\hat{y}$ par le filtre courant et ensuite comparer cette erreur courante avec l'erreur correspondante de référence $MSE_0$ obtenue lors de l'étalonnage au sol du filtre de référence.

Plus particulièrement, on calcule d'abord l'erreur quadratique moyenne de référence $MSE_0$ entre la variable de sortie représentant une position réelle des vérins 29 mesurée lors des phases de tests sur bancs et la variable de sortie correspondante représentant une position des vérins 29 estimée par le filtre rationnel de référence $\left(F_j^0(w)\right)_{j=1\cdots k}$.

Ensuite, on calcule l'erreur quadratique moyenne courante *MSE* entre une variable de sortie courante représentant la position réelle des vérins 29 mesurée lors des mesures en temps réel et une variable de sortie correspondante représentant la position des vérins 29 estimée par le filtre rationnel courant $(F_j(w))_{j=1\ldots k}$.

Ainsi, on peut calculer l'écart entre les deux filtres par un rapport $e_0$ entre l'erreur quadratique moyenne courante *MSE* et l'erreur quadratique moyenne de référence $MSE_0$ :

$$e_0 = \frac{MSE}{MSE_0}.$$

Ce rapport permet de tester la précision du filtre courant par rapport au filtre de référence. La valeur du rapport $e_0$ peut éventuellement être inférieure à 1 si le filtre courant est localement mieux réglé que celui de référence lors des tests sur banc. En revanche, lorsque la valeur du rapport $e_0$ est supérieure à une valeur prédéterminée (par exemple par une étude statistique du rapport sur des données initiales normales), alors on signale une anomalie de comportement.

Une autre technique de comparaison entre le modèle courant et le modèle de référence consiste à calculer par les moyens de traitement 5 des indicateurs de suivi de variation d'énergie résiduelle.

Ainsi, on calcule pour chaque variable d'entrée $x_j(t)$ (parmi les k entrées), la densité du spectre de puissance $|X_j(w)|^2$ par une transformée de Fourier de la fonction d'auto-corrélation $R_{jj}(\tau)$ du signal ou variable d'entrée $x_j(t)$ :

$$\left|X_j(w)\right|^2 = \int R_{jj}(\tau)e^{-iw\tau}d\tau \ \text{avec} \ R_{jj}(\tau) = E\left[x_j(t), x_j(t-\tau)\right]$$

Ensuite, on calcule une suite $e=(e_j)_{j=1\ldots k}$ d'indicateurs locaux $e_j$ par une intégration pondérée par les filtres rationnels courant $(F_j(w))_{j=1\ldots k}$ et de référence $\left(F_j^0(w)\right)_{j=1\cdots k}$ sur une largeur de bande de fréquences de chaque variable d'entrée $x_j(t)$ :

$$e_j = \frac{1}{2\pi}\int\left(F_j(w) - F_j^0(w)\right)\left|X_j(w)\right|^2 dw$$

Le terme $F_j(w)|X_j(w)|^2$ correspond au spectre de densité de puissance de la variable d'entrée $x_j(t)$.

On notera que pour plus de rapidité de calcul, on peut ne tenir compte que des réponses fréquentielles pour chaque spectre de puissance $|X_j(w)|^2$ sans calculer l'intégral.

Ensuite, on calcule une suite $z=(z_j)_{j=1\ldots k}$ de scores locaux $z_j=e_j-\hat{e}_j$ selon une technique de corrélation entre les indicateurs locaux $e_j$, où $\hat{e}_j$ est un estimateur de régression entre un indicateur local $e_j$ et les autres indicateurs locaux :

$$\hat{e}_j = E\left[e_j/e_i \ ; i \neq j\right] \approx c_{j,0} + \sum_{i\neq j} c_{j,i}e_i \ \text{avec} \ c_{j,i} \ \text{des coefficients de régression.}$$

Par ailleurs, on peut calculer un score global $Z^2$ selon une distance de Mahalanobis mesurant la dissimilarité entre une suite $z=(z_j)_{j=1\ldots k}$ de résidus $z_j=e_j-\hat{e}_j$ et la moyenne $\bar{z}$ de z, calculée pendant les phases de tests sur bancs avec une matrice de covariance $\sum$. Le score global $Z^2$ est donné alors par la formule suivante :

$$Z^2 = \left(z - \bar{z}\right)^T \Sigma^{-1}\left(z - \bar{z}\right)$$

Afin de minimiser les risques d'erreurs lorsque le régime de vol est faiblement identifié, on peut définir un score final $Q_{FR}\times Z^2$ en multipliant le score globale $Z^2$ par le facteur de qualité de classification du régime de vol $Q_{FR} \in [0,1]$.

Une alerte d'anomalie de comportement est alors signalée lorsque la valeur du score final $Q_{FR}\times Z^2$ dépasse une valeur prédéterminée. Cette valeur pourra être déterminée par exemple en prenant en compte la distribution de $Z^2$ (ici, $Z^2$ suit une distribution de loi connue, à savoir un chi-2 ($\chi^2$), dont on connait les quantiles).

Dans le cas où une anomalie est détectée, il est possible alors d'analyser plus en détail les indicateurs pour retrouver l'élément défaillant du circuit de régulation 21a du moteur 1.

En effet, on peut suivre chaque indicateur local normalisé $z=(z_j-\bar{z}_j)/\sigma_j$ où $\sigma_j$ est le jème élément diagonal de la

matrice de covariance $\Sigma$.

Selon une implémentation préférée, les différentes étapes du procédé selon l'invention sont exécutées au moyen d'instructions de code de programme.

En conséquence, l'invention vise aussi un produit programme d'ordinateur, ce programme étant susceptible d'être mis en oeuvre dans les moyens de traitement ou un système informatique, ce programme comportant des instructions de code adaptées à la mise en oeuvre d'un procédé selon l'invention tel que décrit ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou un autre moyen d'enregistrement.

D'autre part, le support d'informations peut être un support transmissible tel qu'un signal électrique ou optique, qui peut être acheminé via un câble électrique ou optique, par radio ou par d'autres moyens.

Alternativement, le support d'informations peut être un circuit intégré dans lequel le programme est incorporé, le circuit étant adapté pour exécuter ou pour être utilisé dans l'exécution du procédé en question.

## Revendications

1. Procédé de détection d'anomalie dans un moteur d'aéronef (1), **caractérisé en ce qu'**il comporte les étapes suivantes :

   - définir un modèle de comportement d'un moyen de contrôle (21) dudit moteur d'aéronef (1) selon une régression temporelle modélisant le comportement dudit moyen de contrôle (21) en fonction d'un jeu de données relatif audit moyen de contrôle comprenant des mesures des comportements passés et des mesures de commande et d'état dudit moyen de contrôle (21) ;
   - recalculer de manière continue ledit modèle de comportement pour chaque nouveau jeu de données ; et
   - surveiller une évolution statistique dudit modèle de comportement pour détecter une anomalie de comportement dudit moyen de contrôle (21) reflétant une anomalie de fonctionnement dudit moteur (1).

2. Procédé selon la revendication 1 comportant les étapes suivantes :

   - recueillir un jeu de données initial relatif audit moyen de contrôle (21) ;
   - décomposer ledit jeu de données initial en plusieurs intervalles homogènes représentant différents régimes de vols (R1-R6) identifiés par des indicateurs de régime définis suivant des critères établis par expertise ; et
   - définir un modèle de comportement de référence pour chaque régime de vol.

3. Système de détection d'anomalie dans un moteur d'aéronef (1), **caractérisé en ce qu'**il comporte :

   - des moyens (5) pour définir un modèle de comportement d'un moyen de contrôle (21) dudit moteur d'aéronef (1) selon une régression temporelle modélisant le comportement dudit moyen de contrôle (21) en fonction d'un jeu de données relatif audit moyen de contrôle comprenant des mesures des comportements passés et des mesures de commande et d'état dudit moyen de contrôle (21) ;
   - des moyens (5) pour recalculer de manière continue ledit modèle de comportement pour chaque nouveau jeu de données ; et
   - des moyens (5) pour surveiller une évolution statistique dudit modèle de comportement pour détecter une anomalie de comportement dudit moyen de contrôle reflétant une anomalie de fonctionnement dudit moteur (1).

4. Système selon la revendication 3, comportant :

   - des moyens (5) pour recueillir un jeu de données initial relatif audit moyen de contrôle (21) ;
   - des moyens (5) pour décomposer ledit jeu de données initial en plusieurs intervalles homogènes représentant différents régimes (R1-R6) de vols identifiés par des indicateurs de régime définis suivant des critères établis par expertise ; et
   - des moyens (5) pour définir un modèle de comportement de référence pour chaque régime de vol.

**5.** Système selon la revendication 4 comportant :

- des moyens (5) pour recueillir au cours du temps un jeu de données courant relatif audit moyen de contrôle (21) ;
- des moyens (5) pour stocker dans un tampon de mémoire (23) le contenu dudit jeu de données courant pour une période de temps prédéterminée ;
- des moyens (5) pour calculer à partir dudit jeu de données courant une estimation des indicateurs de régime pour identifier un régime de vol courant spécifique à ladite période de temps prédéterminée ;
- des moyens (5) pour calculer un modèle de comportement courant correspondant audit jeu de données courant et audit régime de vol courant ;
- des moyens (5) pour estimer une distance de comportement entre ledit modèle de comportement courant et ledit modèle de comportement de référence correspondant audit régime de vol courant ; et
- des moyens (5) pour détecter une anomalie de comportement dudit moyen de contrôle (21) lorsque ladite distance de comportement est supérieure à un seuil de normalité prédéterminé.

**6.** Système selon la revendication 5, **caractérisé en ce que** ledit modèle de comportement est un filtre rationnel, le système comportant :

- des moyens (5) pour standardiser ledit jeu de données initial en retranchant un filtre passe-bas et en normalisant par rapport à une variance locale estimée pour chaque régime de vol ;
- des moyens (5) pour définir une pluralité de formules mathématiques, chaque formule exprimant un vecteur de sortie à un instant présent $y(t)$ représentant un comportement courant dudit moyen de contrôle (21) en fonction des vecteurs de sortie à des instants précédents $y(t\text{-}i)$ représentant des mesures de comportements antérieurs, et des vecteurs d'entrées comprenant un vecteur d'entrée à un instant présent $x(t)$ et des vecteurs d'entrées à des instants précédents $x(t\text{-}i)$, chaque vecteur d'entrée $x$ étant construit par une concaténation desdites mesures de commande et d'état dudit moyen de contrôle ;
- des moyens (5) pour définir selon ladite pluralité de formules mathématiques un filtre rationnel de référence pour chaque régime de vol ; et
- des moyens (5) pour calculer selon ladite pluralité de formules mathématiques un filtre rationnel courant relatif audit jeu de données courant et audit régime de vol courant.

**7.** Système selon la revendication 6, **caractérisé en ce que** chaque formule mathématique de ladite pluralité de formules mathématiques correspond à une équation linéaire entre lesdits vecteurs de sortie $y$ et d'entrée $x$ décrite de manière analytique dans le domaine temporel par $A(q)y=B(q)x$ avec $A(q)$ un polynôme réel de la forme $A(q)=1+a_1 q^{-1}+a_2 q^{-2}+\cdots+a_{ra}q^{-ra}$ et $B(q)$ un polynôme réel dont chaque coefficient est un vecteur ligne de même dimension que le vecteur d'entrée $x$ de la forme $B(q)=b_0+b_1 q^{-1}+b_2 q^{-2}+\cdots+b_{rb}q^{-rb}$ avec $q^{-1}(x(t))=x(t\text{-}1)$.

**8.** Système selon la revendication 7, **caractérisé en ce qu'**il comporte :

- des moyens (5) pour extraire des zéros et pôles courants des polynômes associés audit filtre rationnel courant correspondant audit régime de vol courant ;
- des moyens (5) pour calculer suivant des critères d'expertise des indicateurs de normalités pour ledit régime de vol courant à partir desdits zéros et pôles courants et d'autres informations représentant un contexte d'acquisition relatif audit moyen de contrôle (21); et
- des moyens (5) pour détecter une anomalie de comportement dudit moyen de contrôle (21) lorsqu'une distance entre lesdits indicateurs de normalités et un seuil de normalité correspondant est supérieure à une valeur prédéterminée.

**9.** Système selon la revendication 7, **caractérisé en ce qu'**il comporte :

- des moyens (5) pour définir une distance selon une fonction adaptée à la dynamique dudit moyen de contrôle (21) ; et
- des moyens (5) pour détecter une anomalie de comportement dudit moyen de contrôle (21) lorsque ladite distance entre le filtre rationnel de référence et le filtre rationnel courant est supérieure à une valeur prédéterminée.

**10.** Système selon l'une quelconque des revendications 3 à 9, **caractérisé en ce que** ledit moyen de contrôle (21) correspond à un circuit de régulation (21a) qui actionne des vérins (29) contrôlant des vannes stators (25a, 25b) sur un compresseur basse pression (27a) et un compresseur haute pression (27b) d'un turboréacteur (1) permettant de modifier la géométrie desdits compresseurs (27a, 27b) en fonction du régime de vol et **en ce que** ledit jeu de données relatif audit circuit de régulation (21a) comprennent des données sur les positions des vérins (29) et des données externes comprenant une première vitesse de rotation $N1$ d'un arbre dudit compresseur basse pression (27a), une seconde vitesse de rotation N2 d'un arbre dudit compresseur haute pression (27b), une pression $P$ en aval des compresseurs, un débit $W$ du carburant, et une commande $u$ des vérins (29).

**11.** Système selon la revendication 10, **caractérisé en ce qu'**il comporte :

- des moyens (5) pour définir un filtre autorégressif discret à régime stationnaire pour modéliser le comportement d'une variable de sortie à un instant présent $y(t)$ correspondant à la position courante des vérins (29) en fonction des variables de sortie à des instants précédents $y(s; s<t)$ correspondant à des positions antérieures des vérins (29) et des variables d'entrées $x(s)=(x_j(s); s \leq t)_{j=1...k}$ correspondant auxdites données externes à des instants présent et précédents, ledit filtre autorégressif s'exprimant dans un spectre fréquentiel $w$ par un filtre rationnel $(F_j(w))_{j=1...k}$ (31) de fractions polynômiales de la forme :

$$F_j(w) = \frac{B_j(w)}{A(w)},$$

où $B_j(w)=b_{j,0}+b_{j,1}w+\cdots+b_{j,r_j}w^{r_j}$ et $A(w)=1-\alpha_1 w-\cdots-\alpha_{r_0}w^{r_0}$ ;
- des moyens (5) pour recueillir des données numériques initiales représentant des variables d'entrées et de sorties initiales $(x^0(s), y^0(s))$ mesurées et stockées pendant des phases de tests sur bancs ;
- des moyens (5) pour identifier les régimes de vol à partir desdites données numériques initiales ;
- des moyens (5) pour calculer pour chaque régime de vol, un ensemble optimal de rangs $r_j$ et $r_0$ desdites fractions polynômiales dudit filtre rationnel $(F_j(w))_{j=1...k}$ ; et

- des moyens (5) pour calculer pour chaque régime de vol, un filtre rationnel de référence $\left(F_j^0(w)\right)_{j=1\cdots k}$.

**12.** Système selon la revendication 11, **caractérisé en ce qu'**il comporte :

- des moyens (5) pour stocker au cours du temps des mesures numériques représentant des variables d'entrées et de sorties $(x(s), y(s))$ dans un tampon de mémoire (23) pour former un échantillon de N mesures :

$$I_t = \left\{ (x(s), y(s)) ; s \in [t-N+1, \cdots t] \right\} ;$$

- des moyens (5) pour tester la stabilité dudit échantillon de N mesures ;
- des moyens (5) pour identifier le régime de vol courant et estimer sa qualité de classification $Q_{FR} \in [0,1]$ ;
- des moyens (5) pour estimer un filtre rationnel courant $(F_j(w))_{j=1...k}$ pour l'ensemble optimal de rangs associé audit régime de vol courant ;
- des moyens (5) pour comparer ledit filtre rationnel courant $(F_j(w))_{j=1...k}$ au filtre rationnel de référence $\left(F_j^0(w)\right)_{j=1\cdots k}$ correspondant au même régime de vol ; et
- des moyens (5) pour signaler une anomalie de comportement dudit circuit de régulation (21a) lorsqu'un écart entre ledit filtre rationnel courant $(F_j(w))_{j=1...k}$ et ledit filtre rationnel de référence $\left(F_j^0(w)\right)_{j=1\cdots k}$ est supérieur à une valeur prédéterminée.

**13.** Système selon la revendication 12, **caractérisé en ce qu'**il comporte :

- des moyens (5) pour calculer une erreur quadratique moyenne de référence $MSE_0$ entre une variable de sortie représentant une position réelle des vérins (29) mesurée lors des phases de tests sur bancs et une variable de sortie correspondante représentant une position des vérins (29) estimée par ledit filtre rationnel de référence $\left(F_j^0(w)\right)_{j=1\cdots k}$ ;
- des moyens (5) pour calculer une erreur quadratique moyenne courante $MSE$ entre une variable de sortie courante représentant une position réelle des vérins (29) mesurée lors des mesures en temps réel et une variable de sortie correspondante représentant une position des vérins (29) estimée par ledit filtre rationnel courant $(F_j(w))_{j=1...k}$ ;

- des moyens (5) pour calculer un écart défini par un rapport $e_0$ entre ladite erreur quadratique moyenne courante $MSE$ et ladite erreur quadratique moyenne de référence $MSE_0$ :

$$e_0 = MSE\big/MSE_0 \;\; ;$$

et

- des moyens (5) pour signaler une anomalie lorsque ledit rapport $e_0$ est supérieur à une valeur prédéterminée.

14. Système selon la revendication 12, **caractérisé en ce qu'**il comporte :

- des moyens (5) pour calculer une suite $e=(e_j)_{j=1...k}$ d'indicateurs locaux $e_j$ par une intégration pondérée par lesdits filtres rationnels courant $(F_j(w))_{j=1...k}$ et de référence $(F_j(w))_{j=1...k}$ sur une largeur de bande de fréquences de chaque variable d'entrée $x_j(t)$ :

$$e_j = \frac{1}{2\pi} \int \left(F_j(w) - F_j^0(w)\right)\left|X_j(w)\right|^2 dw \;\; \text{avec} \;\; \left|X_j(w)\right|^2 = \int R_{jj}(\tau)e^{-iw\tau}d\tau$$

et

$$R_{jj}(\tau) = E\left[x_j(t),\, x_j(t-\tau)\right] \;\; ;$$

- des moyens (5) pour calculer une suite $z=(z_j)_{j=1...k}$ de scores locaux $z_j=e_j-\hat{e}_j$ selon une technique de corrélation entre lesdits indicateurs locaux $e_j$,

où $\hat{e}_j$ est un estimateur entre un indicateur local $e_j$ et les autres indicateurs locaux :

$$\hat{e}_j = E\left[e_j\,/\,e_i \;;\; i \neq j\right] \approx c_{j,0} + \sum_{i \neq j} c_{j,i}e_i \;\; \text{avec } c_{j,i} \text{ des coefficients de régression ;}$$

- des moyens (5) pour calculer un score global $Z^2$ selon une distance de Mahalanobis :

$Z^2=(z-\bar{z})^T\Sigma^{-1}(z-\bar{z})$, où $\bar{z}$ est une moyenne de $z$ calculée pendant les phases de tests sur bancs avec une matrice de covariance $\Sigma$ ;

- des moyens (5) pour calculer un score final $Q_{FR}\times Z^2$ en multipliant le score globale $Z^2$ par le facteur de qualité de classification du régime de vol $Q_{FR} \in [0,1]$ ; et

- des moyens (5) pour signaler une alerte d'anomalie de comportement lorsque la valeur du score final $Q_{FR}\times Z^2$ dépasse une valeur prédéterminée.

15. Programme d'ordinateur comportant des instructions pour la mise en oeuvre du procédé de détection selon les revendications 1 ou 2 lorsqu'il est exécuté par des moyens de traitement.

**Patentansprüche**

1. Verfahren zur Erfassung einer Anomalie in einem Flugzeugtriebwerk (1), **dadurch gekennzeichnet, dass** es die folgenden Schritte umfasst:

- Definieren eines Verhaltensmodells eines Steuermittels (21) des Flugzeugtriebwerks (1) entsprechend einer zeitlichen Regression, die das Verhalten des Steuermittels (21) in Abhängigkeit eines Datensatzes bezüglich des Steuermittels, welcher Messwerte der vergangenen Verhalten sowie Steuer- und Zustandsmesswerte des Steuermittels (21) umfasst, modelliert,
- kontinuierliches erneutes Berechnen des Verhaltensmodells für jeden neuen Datensatz und
- Überwachen einer statistischen Entwicklung des Verhaltensmodells, um eine Verhaltensanomalie des Steuermittels (21), welche eine Betriebsanomalie des Triebwerks (1) widerspiegelt, zu erfassen.

**2.** Verfahren nach Anspruch 1, das die folgenden Schritte umfasst:

- Sammeln eines Ausgangsdatensatzes bezüglich des Steuermittels (21),
- Zerlegen des Ausgangsdatensatzes in mehrere homogene Intervalle, die unterschiedliche Flugzustände (R1-R6) darstellen, die durch Zustandsindikatoren, welche nach durch Expertise aufgestellten Kriterien definiert sind, erkannt werden, und
- Definieren eines Referenzverhaltensmodells für jeden Flugzustand.

**3.** System zur Erfassung einer Anomalie in einem Flugzeugtriebwerk (1), **dadurch gekennzeichnet, dass** es umfasst:

- Mittel (5) zum Definieren eines Verhaltensmodells eines Steuermittels (21) des Flugzeugtriebwerks (1) entsprechend einer zeitlichen Regression, die das Verhalten des Steuermittels (21) in Abhängigkeit eines Datensatzes bezüglich des Steuermittels, welcher Messwerte der vergangenen Verhalten sowie Steuer- und Zustandsmesswerte des Steuermittels (21) umfasst, modelliert,
- Mittel (5) zum kontinuierlichen erneuten Berechnen des Verhaltensmodells für jeden neuen Datensatz und
- Mittel (5) zum Überwachen einer statistischen Entwicklung des Verhaltensmodells, um eine Verhaltensanomalie des Steuermittels, welche eine Betriebsanomalie des Triebwerks (1) widerspiegelt, zu erfassen.

**4.** System nach Anspruch 3, das umfasst:

- Mittel (5) zum Sammeln eines Ausgangsdatensatzes bezüglich des Steuermittels (21),
- Mittel (5) zum Zerlegen des Ausgangsdatensatzes in mehrere homogene Intervalle, die unterschiedliche Flugzustände (R1-R6) darstellen, die durch Zustandsindikatoren, welche nach durch Expertise aufgestellten Kriterien definiert sind, erkannt werden, und
- Mittel (5) zum Definieren eines Referenzverhaltensmodells für jeden Flugzustand.

**5.** System nach Anspruch 4, das umfasst:

- Mittel (5), um im Laufe der Zeit einen aktuellen Datensatz bezüglich des Steuermittels (21) zu sammeln,
- Mittel (5), um den Inhalt des aktuellen Datensatzes für einen vorbestimmten Zeitraum in einem Speicherpuffer (23) zu speichern,
- Mittel (5), um anhand des aktuellen Datensatzes einen Schätzwert der Zustandsindikatoren zu berechnen, um einen akutellen Flugzustand, der für den vorbestimmten Zeitraum spezifisch ist, zu erkennen,
- Mittel (5), um ein aktuelles Verhaltensmodell, das dem aktuellen Datensatz und dem aktuellen Flugzustand entspricht, zu berechnen,
- Mittel (5), um eine Verhaltensdistanz zwischen dem aktuellen Verhaltensmodell und dem Referenzverhaltensmodell, das dem aktuellen Flugzustand entspricht, zu schätzen, und
- Mittel (5), um eine Verhaltensanomalie des Steuermittels (21) zu erfassen, wenn die Verhaltensdistanz größer als eine vorbestimmte Normalitätsschwelle ist.

**6.** System nach Anspruch 5, **dadurch gekennzeichnet, dass** das Verhaltensmodell ein rationales Filter ist, wobei das System umfasst:

- Mittel (5), um den Ausgangsdatensatz durch Abziehen eines Tiefpassfilters und durch Normieren in Bezug auf eine für jeden Flugzustand geschätzte lokale Varianz zu standardisieren,
- Mittel (5), um eine Vielzahl von mathematischen Formeln zu definieren, wobei jede Formel einen Ausgangsvektor zu einem gegenwärtigen Zeitpunkt $y(t)$, der ein aktuelles Verhalten des Steuermittels (21) in Abhängigkeit von den Ausgangsvektoren zu vorhergehenden Zeitpunkten $y(t-i)$ darstellt, die Messwerte von früheren Verhalten darstellen, sowie Eingangsvektoren ausdrückt, die einen Eingangsvektor zu einem gegenwärtigen Zeitpunkt $x(t)$ und Eingangsvektoren zu vorhergehenden Zeitpunkten $x(t-i)$ umfassen, wobei ein jeder Eingangsvektor $x$ durch eine Verkettung der Steuer- und Zustandsmesswerte des Steuermittels erstellt wird,
- Mittel (5), um entsprechend der Vielzahl von mathematischen Formeln ein rationales Referenzfilter für jeden Flugzustand zu definieren, und

- Mittel (5), um entsprechend der Vielzahl von mathematischen Formeln ein aktuelles rationales Filter bezüglich des aktuellen Datensatzes und des aktuellen Flugzustands zu berechnen.

7. System nach Anspruch 6, **dadurch gekennzeichnet, dass** jede mathematische Formel der Vielzahl von mathematischen Formeln einer linearen Gleichung zwischen den Ausgangs- y und Eingangsvektoren x entspricht, die in dem Zeitbereich durch A(q)y = B(q)x analytisch beschrieben ist, wobei A(q) ein reelles Polynom der Form A(q) = 1 + $a_1q^{-1}$ + $a_2q^{-2}$ +...+ $a_{ra}q^{-ra}$ ist und B(q) ein reelles Polynom ist, von dem jeder Koeffizient ein Zeilenvektor mit gleicher Dimension wie der Eingangsvektor x der Form B(q) = $b_0$ + $b_1q^{-1}$ + $b_2q^{-2}$ +...+ $b_{rb}q^{-rb}$ , mit $q^{-1}$ (x(t)) = x(t-1), ist.

8. System nach Anspruch 7, **dadurch gekennzeichnet, dass** es umfasst:

   - Mittel (5) zum Extrahieren von aktuellen Nullstellen und Polen aus den Polynomen, die dem aktuellen rationalen Filter, welches dem aktuellen Flugzustand entspricht, zugeordnet sind,
   - Mittel (5), um entsprechend Expertise-Kriterien Normalitätsindikatoren für den aktuellen Flugzustand anhand der aktuellen Nullstellen und Pole und weiterer Informationen, die einen Erfassungszusammenhang bezüglich des Steuermittels (21) darstellen, zu berechnen, und
   - Mittel (5) zum Erfassen einer Verhaltensanomalie des Steuermittels (21), wenn eine Distanz zwischen den Normalitätsindikatoren und einer entsprechenden Normalitätsschwelle größer als ein vorbestimmter Wert ist.

9. System nach Anspruch 7, **dadurch gekennzeichnet, dass** es umfasst:

   - Mittel (5) zum Definieren einer Distanz entsprechend einer an die Dynamik des Steuermittels (21) angepassten Funktion, und
   - Mittel (5) zum Erfassen einer Verhaltensanomalie des Steuermittels (21), wenn die Distanz zwischen dem rationalen Referenzfilter und dem aktuellen rationalen Filter größer als ein vorbestimmter Wert ist.

10. System nach einem der Ansprüche 3 bis 9, **dadurch gekennzeichnet, dass** das Steuermittel (21) einem Regelkreis (21 a) entspricht, der Zylinder (29) betätigt, welche Statorventile (25a, 25b) an einem Niederdruckverdichter (27a) und einem Hochdruckverdichter (27b) eines Turbostrahltriebwerks (1) steuern, die ermöglichen, die Geometrie der Verdichter (27a, 27b) in Abhängigkeit von dem Flugzustand zu verändern, und dass der Datensatz bezüglich des Regelkreises (21 a) Daten über die Positionen der Zylinder (29) und externe Daten umfasst, die eine erste Drehzahl N1 einer Welle des Niederdruckverdichters (27a), eine zweite Drehzahl N2 einer Welle des Hochdruckverdichters (27b), einen Druck P stromab der Verdichter, einen Durchsatz W des Treibstoffs und eine Steuerung u der Zylinder (29) umfassen.

11. System nach Anspruch 10, **dadurch gekennzeichnet, dass** es umfasst:

   - Mittel (5) zum Definieren eines diskreten, autoregressiven Filters mit stationärem Zustand, um das Verhalten einer Ausgangsvariablen zu einem gegenwärtigen Zeitpunkt y(t), welcher der aktuellen Position der Zylinder (29) entspricht, in Abhängigkeit von den Ausgangsvariablen zu vorhergehenden Zeitpunkten y(s; s < t), die früheren Positionen der Zylinder (29) entsprechen, und von den Eingangsvariablen x(s) = $(x_j(s), s \leq t)_{j=l...k}$, die den externen Daten zu(m) gegenwärtigen und vorhergehenden Zeitpunkten entsprechen, zu modellieren, wobei das autoregressive Filter sich in einem Frequenzspektrum w durch ein rationales Filter $(F_j(w))_{j=l...k}$ (31) von Polynom-Fraktionen der Form $F_j(w) = \dfrac{B_j(w)}{A(w)}$ äußert, worin $B_j(wi)=b_{j.0}+b_{j.1}w+\cdots+b_{j.r_j}w^{rj},$ und $A(w)=1-a_1w-\cdots a_{rh}w^{r0},$
   - Mittel (5) zum Sammeln von numerischen Ausgangsdaten, die anfängliche Eingangs- und Ausgangsvariablen $(x^0(s), y^0(s))$, welche während Testphasen auf dem Prüfstand gemessen und gespeichert werden, darstellen,
   - Mittel (5) zum Erkennen der Flugzustände anhand der numerischen Ausgangsdaten,
   - Mittel (5), um für jeden Flugzustand eine optimale Menge von Rängen rj und ro der Polynom-Fraktionen des rationalen Filters $(F_j(w))_{j=1...k}$ zu berechnen, und
   - Mittel (5), um für jeden Flugzustand ein rationales Referenzfilter, $\left(F_j^0(w)\right)_{j=l\cdots k}$ zu berechnen.

12. System nach Anspruch 11, **dadurch gekennzeichnet, dass** es umfasst:

- Mittel (5), um im Laufe der Zeit numerische Messwerte, die Eingangs- und Ausgangsvariablen (x(s), y(s)) darstellen, in einem Speicherpuffer (23) zu speichern, um eine Probe von N Messwerten zu bilden:

$$I_t = \left\{ (x(s), y(s)) \, ; \, s \in [t-N+1, \cdots t] \right\} \, ;$$

- Mittel (5) zum Testen der Stabilität der Probe von N Messwerten,
- Mittel (5) zum Erkennen des aktuellen Flugzustands und zum Schätzen seiner Klassifikationsqualität $Q_{FR} \in [0,1]$,
- Mittel (5) zum Schätzen eines aktuellen rationalen Filters $(F_j(w))_{j=1\ldots k}$ für die optimale Menge von Rängen, die dem aktuellen Flugzustand zugeordnet ist,
- Mittel (5) zum Vergleichen des aktuellen rationalen Filters $(F_j(w))_{j=1\ldots k}$ mit dem rationalen Referenzfilter

$$\left( F_j^0(w) \right)_{j=1\ldots k},$$ der dem gleichen Flugzustand entspricht, und

- Mittel (5) zum Signalisieren einer Verhaltensanomalie des Regelkreises (21a), wenn eine Abweichung zwischen dem aktuellen rationalen Filter $(F_j(w))_{j=1\ldots k}$ und dem rationalen Referenzfilter $\left( F_j^0(w) \right)_{j=1\ldots k}$ größer als ein vorbestimmter Wert ist.

**13.** System nach Anspruch 12, **dadurch gekennzeichnet, dass** es umfasst:

- Mittel (5) zum Berechnen eines mittleren quadratischen Referenzfehlers $MSE_0$ zwischen einer Ausgangsvariablen, die eine tatsächliche Position der Zylinder (29), welche während der Testphasen auf dem Prüfstand gemessen wird, darstellt, und einer entsprechenden Ausgangsvariablen, die eine Position der Zylinder (29), welche durch das rationale Referenzfilter $\left( F_j^0(w) \right)_{j=1\ldots k}$ geschätzt wird, darstellt,
- Mittel (5) zum Berechnen eines aktuellen mittleren quadratischen Fehlers MSE zwischen einer aktuellen Ausgangsvariablen, die eine tatsächliche Position der Zylinder (29), welche während der Echtzeitmessungen gemessen wird, darstellt, und einer entsprechenden Ausgangsvariablen, die eine Position der Zylinder (29), welche durch das aktuelle rationale Filter $(F_j(w))_{j=1\ldots k}$ geschätzt wird, darstellt,
- Mittel (5) zum Berechnen einer Abweichung, die durch ein Verhältnis $e_0$ zwischen dem aktuellen mittleren quadratischen Fehler MSE und dem mittleren quadratischen Referenzfehler $MSE_0$ definiert ist:

$$e_0 = MSE \big/ MSE_0 \, ,$$

und
- Mittel (5) zum Signalisieren einer Anomalie, wenn das Verhältnis $e_0$ größer als ein vorbestimmter Wert ist.

**14.** System nach Anspruch 12, **dadurch gekennzeichnet, dass** es umfasst:

- Mittel (5) zum Berechnen einer Folge $e=(e_j)_{j=1\ldots k}$ von lokalen Indikatoren $e_j$ durch eine durch das aktuelle rationale Filter $(F_j(w))_{j=1\ldots k}$ und das rationale Referenzfilter $\left( F_j^0(w) \right)_{j=1\ldots k}$ gewichtete Integration über eine Frequenzbandbreite einer jeden Eingangsvariablen $x_j$ (t):

$$e_j = \frac{1}{2\pi} \int \left( F_j(w) - F_j^0(w) \right) \left| X_j(w) \right|^2 dw \quad \text{mit} \quad \left| X_j(w) \right|^2 = \int R_{jj}(\tau) e^{-iw\tau} d\tau$$

und

$$R_{jj}(\tau) = E\left[ x_j(t), x_j(t-\tau) \right] ,$$

- Mittel (5) zum Berechnen einer Folge z=(z_j)_{j=1...k} von lokalen Scores $z_j = e_j - \hat{e}_j$ nach einer Technik der Korrelation zwischen den lokalen Indikatoren $e_j$, worin $\hat{e}_j$ ein Schätzer zwischen einem lokalen Indikator $e_j$ und den anderen

lokalen Indikatoren ist: $\hat{e}_j = E\left[e_j / e_i \; ; \; i \neq j\right] \approx c_{j,0} + \sum_{i \neq j} c_{j,i} e_i$, wobei $e_{j,i}$ Regressionskoeffizienten sind,

- Mittel (5) zum Berechnen eines Gesamtscores $Z^2$ nach einer Mahalanobis-Distanz:

$Z^2 = (z-\bar{z})^T \Sigma^{-1} (z-\bar{z})$, worin $\bar{z}$ ein Mittelwert von Z ist, der während der Testphasen auf dem Prüfstand mit einer Kovarianzmatrix $\Sigma$ berechnet wird,

- Mittel (5) zum Berechnen eines finalen Scores $Q_{FR} \times Z^2$ durch Multiplizieren des Gesamtscores $Z^2$ mit dem Klassifikationsqualitätsfaktor des Flugzustands $Q_{FR} \in [0,1]$, und
- Mittel (5) zum Melden eines Alarms einer Verhaltensanomalie, wenn der Wert des finalen Scores $Q_{FR} \times Z^2$ einen vorbestimmten Wert überschreitet.

15. Computerprogrammm, umfassend Befehle für die Durchführung des Erfassungsverfahrens nach den Ansprüchen 1 oder 2, wenn es durch Verarbeitungsmittel ausgeführt wird.

## Claims

1. A method of detecting anomalies in an aeroengine (1), the method being **characterized in that** it comprises the following steps:

   • defining a behavior model for control means (21) of said aeroengine (1) by using time regression that models the behavior of said control means (21) as a function of a data set relating to said control means and including measurements of past behaviors, and state and control measurements of said control means (21);
   • continuously recalculating said behavior model for each new data set; and
   • monitoring the statistical variation of said behavior model in order to detect a behavior anomaly of said control means (21) representing an operating anomaly of said engine (1).

2. A method according to claim 1, comprising the following steps:

   • collecting an initial data set relating to said control means (21);
   • splitting said initial data set into a plurality of uniform ranges representing different flight regimes (R1-R6) identified by regime indicators defined using criteria established by experts; and
   • defining a reference behavior model for each flight regime.

3. A system for detecting anomalies in an aeroengine (1), the system being **characterized in that** it comprises:

   • means (5) for defining a behavior model of control means (21) of said aeroengine (1) by using a time regression that models the behavior of said control means (21) as a function of a data set relating to said control means and including measurements of past behaviors and command and state measurements of said control means (21) ;
   • means (5) for continuously recalculating said behavior model for each new data set; and
   • means (5) for monitoring statistical variation of said behavior model in order to detect a behavior anomaly of said control means representing an operating anomaly of said engine (1).

4. A system according to claim 3, comprising:

   • means (5) for collecting an initial data set relating to said control means (21);
   • means (5) for splitting said initial data set into a plurality of uniform intervals representing different flight regimes (R1-R6) identified by regime indicators defined using criteria established by experts; and
   • means (5) for defining a reference behavior model for each flight regime.

5. A system according to claim 4, comprising:

• means (5) for acting over time to collect a current data set relating to said control means (21);

• means (5) for storing the content of said current data set for a predetermined time period in a memory buffer (23);

• means (5) for using said current data set to calculate an estimate of regime indicators to identify a current flight regime specific to said predetermined time period;

• means (5) for calculating a current behavior model corresponding to said current data set and to said current flight regime;

• means (5) for estimating a behavior distance between said current behavior model and said reference behavior model corresponding to said current flight regime; and

• means (5) for detecting a behavior anomaly of said control means (21) when said behavior distance is greater than a predetermined normality threshold.

6. A system according to claim 5, **characterized in that** said behavior model is a rational filter, the system comprising:

• means (5) for standardizing said initial data set by subtracting a lowpass filter and by normalizing relative to local variance estimated for each flight regime;

• means (5) for defining a plurality of mathematical formulae, each formula expressing an output vector at a present instant y(t) representing a current behavior of said control means (21) as a function of output vectors at preceding instants y(t-i) representing earlier behavior measurements, and as a function of input vectors comprising an input vector at a present instant x(t) and input vectors at preceding instants x(t-i), each input vector $\underline{x}$ being constructed by concatenating said command and state measurements of said control means;

• means (5) for using said plurality of mathematical formulae to define a reference rational filter for each flight regime; and

• means (5) for using said plurality of mathematical formulae to calculate a current rational filter relating to said current data set and to said current flight regime.

7. A system according to claim 6, **characterized in that** each mathematical formula of said plurality of mathematical formulae corresponds to a linear equation between said output vectors y and input vectors $\underline{x}$ described analytically in the time domain by:

$$A(q)\,y \;=\; B(q)\,x$$

with A(q) being a real polynomial having the form:

$$A(q) = 1 + a_1 q^{-1} + a_2 q^{-2} + \cdots + a_{ra} q^{-ra}$$

and B(q) being a real polynomial in which each coefficient is a line vector having the same dimension as the input vector $\underline{x}$ and having the form:

$$B(q) = b_0 + b_1 q^{-1} + b_2 q^{-2} + \cdots + b_{rb} q^{-rb}$$

with

$$q^{-1}(x(t)) = x(t-1)$$

8. A system according to claim 7, **characterized in that** it comprises:

• means (5) for extracting current zeros and poles from the polynomials associated with said current rational filter corresponding to said current flight regime;

• means (5) for using expert criteria to calculate normality indicators for said current flight regime from said current zeros and poles and from other information representing an acquisition context relating to said control means (21); and

• means (5) for detecting a behavior anomaly of said control means (21) when a distance between said normality indicators and a corresponding normality threshold is greater than a predetermined value.

9. A system according to claim 7, **characterized in that** it comprises:

> • means (5) for defining a distance by means of a function adapted to the dynamic range of said control means (21); and
> • means (5) for detecting a behavior anomaly of said control means (21) when said distance between the reference rational filter and the current rational filter is greater than a predetermined value.

10. A system according to any one of claims 3 to 9, **characterized in that** said control means (21) correspond to a regulator circuit (21a) that operates actuators (29) controlling stator valves (25a, 25b) on a low pressure compressor (27a) and a high pressure compressor (27b) of a turbojet (1) and serving to modify the geometries of said compressors (27a, 27b) as a function of the flight regime, and **in that** said data set relating to said regulator circuit (21a) includes data about the positions of the actuators (29) and external data including a first speed of rotation N1 of a shaft of said low pressure compressor (27a), a second speed of rotation N2 of a shaft of said high pressure compressor (27b), a pressure P downstream from the compressors, a fuel flow rate W, and a command $\underline{u}$ for the actuators (29).

11. A system according to claim 10, **characterized in that** it comprises:

> • means (5) for defining a steady regime discrete autoregression filter for modeling the behavior of an output variable at a present instant y(t) corresponding to the current position of the actuators (29) as a function of output variables at preceding instants y(s; s < t) corresponding to earlier positions of the actuators (29) and as a function of input variables

$$x(s) = \left( x_j(s); s \leq t \right)_{j=1 \cdots k}$$

> corresponding to said external data at past and present instants, said autoregression filter being expressed in a frequency spectrum $\underline{w}$ by a rational filter $(F_j(w))_{j=1 \ldots k}$ (31) of polynomial fractions having the form:

$$F_j(w) = \frac{B_j(w)}{A(w)}$$

> where

$$B_j(w) = b_{j,0} + b_{j,1} w + \cdots + b_{j,r_j} w^{r_j}$$

> and

$$A(w) = 1 - a_1 w - \cdots - a_{r_0} w^{r_0}$$

> • means (5) for collecting initial digital data representing the initial input and output variables $(x^0(s), y^0(s))$ measured and stored during bench testing stages;
> • means (5) for identifying flight regimes from said initial digital data;
> • means (5) for calculating, for each flight regime, an optimal set of ranks $r_j$ and $r_0$ of said polynomial fractions of said rational filter $(F_j(w))_{j=1 \ldots k}$; and
> • means (5) for calculating, for each flight regime, a reference rational filter $\left( F_j^0(w) \right)_{j=1 \cdots k}$.

12. A system according to claim 11, **characterized in that** it comprises:

> • means (5) for storing over time digital measurements representing input and output variables (x(s),y(s)) in a memory buffer (23) to form an N-measurement sample:

$$I_t = \left\{ \left( x(s), y(s) \right); s \in \left[ t - N + 1, \cdots t \right] \right\}$$

• means (5) for testing the stability of said N-measurement sample;
• means (5) for identifying the current flight regime and for estimating the quality of its classification

$$Q_{FR} \in [0, 1]$$

• means (5) for estimating a current rational filter $(F_j(w))_{j\text{-}1\ldots k}$ for the optimum set of ranks associated with said current flight regime;

• means (5) for comparing said current rational filter $(F_j(w))_{j\text{-}1\ldots k}$ with the reference rational filter $\left( F_j^0(w) \right)_{j=1\cdots k}$

corresponding to the same flight regime; and
• means (5) for indicating a behavior anomaly of said regulator circuit (21a) when a difference between said

current rational filter $(F_j(w))_{j\text{-}1\ldots k}$ and said reference rational filter $\left( F_j^0(w) \right)_{j=1\cdots k}$ is greater than a predetermined value.

**13.** A system according to claim 12, **characterized in that** it comprises:

• means (5) for calculating a reference mean square error $MSE_0$ between an output variable representing a real position of the actuators (29) as measured during bench testing stages and a corresponding output variable representing a position of the actuators (29) as estimated by said reference rational filter $\left( F_j^0(w) \right)_{j=1\cdots k}$ ;

• means (5) for calculating a current mean square error MSE between a current output variable representing a real position of the actuators (29) measured during real time measurements and a corresponding output variable representing a position of the actuators (29) estimated by said current rational filter $(F_j(w))_{j\text{-}1\ldots k}$;
• means (5) for calculating a difference defined by a ratio $e_0$ of said current mean quadratic error MSE and said reference quadratic error $MSE_0$:

$$e_0 = \frac{MSE}{MSE_0} ;$$

and
• means (5) for indicating an anomaly when said ratio $e_0$ is greater than a predetermined value.

**14.** A system according to claim 12, **characterized in that** it comprises:

• means (5) for calculating a sequence $e = (e_j)_{j\text{-}1\ldots k}$ of local indicators $e_j$ by integration weighted by said current and reference rational filters $(F_j(w))_{j\text{-}1\ldots k}$ and $\left( F_j^0(w) \right)_{j=1\cdots k}$ over a frequency bandwidth of each input variable

$x_j(t)$ :

$$e_j = \frac{1}{2\pi} \int \left( F_j(w) - F_j^0(w) \right) \left| X_j(w) \right|^2 dw$$

with

$$\left|X_j(w)\right|^2 = \int R_{jj}(\tau)e^{-iw\tau}d\tau$$

and

$$R_{jj}(\tau) = E\left[x_j(t), x_j(t-\tau)\right]$$

• means (5) for calculating a sequence $z = (z_j)_{j-1\ldots k}$ of local scores $z_j = e_j - \hat{e}_j$ using a correlation technique between said local indicators $e_j$, where $\hat{e}_j$ is an estimator between a local indicator $e_j$ and the other local indicators:

$$\hat{e}_j = E\left[e_j / e_i \; ; i \neq j\right] \approx c_{j,0} + \sum_{i\neq j} c_{j,i}e_i$$

with $c_{j,i}$ being regression coefficients;
• means (5) for calculating a global score $Z^2$ using a Mahalanobis distance:

$$Z^2 = (z - \bar{z})^T \Sigma^{-1}(z - \bar{z})$$

where z is a mean of $\underline{z}$ calculated during bench testing stages with a covariance matrix $\Sigma$;
• means (5) for calculating a final score $Q_{FR}\times Z^2$ by multiplying the global score $Z^2$ by the classification quality factor of the flight regime $Q_{FR}\in[0,1]$; and
• means (5) for indicating a behavior anomaly alert when the value of the final score $Q_{FR}\times Z^2$ exceeds a predetermined value.

**15.** A computer program including instructions for implementing the detection method according to claim 1 or claim 2 when executed by processor means.

FIG.1

RECUEIL DE MESURES AU BANC DE TEST ~ E1

CLASSEMENT DES REGIMES DE VOL ~ E2

DEFINITION D'UN MODELE DE COMPORTEMENT
DE REFERENCE PAR REGIME DE VOL ~ E3

RECUEIL DE MESURES EN TEMPS REEL ~ E4

STOCKAGE DES DONNEES COURANTES DANS UN
TAMPON DE MEMOIRE ~ E5

IDENTIFICATION DU REGIME DE VOL COURANT ~ E6

DEFINITION D'UN MODELE DE COMPORTEMENT
COURANT ~ E7

CALCUL D'UNE DISTANCE ENTRE LE MODELE
DE REFERENCE ET LE MODELE COURANT ~ E8

DETECTION D'UNE ANOMALIE ~ E9

FIG.2

Vitesse moteur

FIG.3

Temps

CONSTRUCTION D' UN JEU DE DONNEES INITIAL — E11

STANDARDISATION DES DONNEES — E12

DEFINITION DES RELATIONS ENTRE DES VARIABLES DE SORTIES ET D'ENTREES — E13

DEFINITION D'UN FILTRE RATIONNEL DE REFERENCE PAR REGIME — E14

FIG.4

RECUEIL D'UN JEU DE DONNEES COURANT — E15

DEFINITION D'UN FILTRE RATIONNEL COURANT — E16

EXTRACTION DES ZEROS ET POLES — E17

CALCUL D'INDICATEURS DE NORMALITE — E18

28

FIG.5

| | |
|---|---|
| RECUEIL DES DONNEES INITIALES RELATIVES AU CIRCUIT DE REGULATION | E21 |

↓

| | |
|---|---|
| CLASSEMENT DES REGIMES DE VOL SELON DES INDICATEURS PROBABILISTES | E22 |

↓

| | |
|---|---|
| CALCUL D'UN ENSEMBLE OPTIMAL DES RANGS | E23 |

↓

| | |
|---|---|
| DEFINITION D'UN FILTRE RATIONNEL DE REFERENCE PAR REGIME | E24 |

## FIG.6A

| | |
|---|---|
| FORMATION D'UN ECHANTILLON DE $N$ MESURES | E25 |

↓

| | |
|---|---|
| TEST DE LA STABILITE DE L'ECHANTILLON | E26 |

↓

| | |
|---|---|
| IDENTIFICATION DU REGIME DE VOL | E27 |

↓

| | |
|---|---|
| DEFINITION D'UN FILTRE RATIONNEL COURANT | E28 |

↓

| | |
|---|---|
| COMPARAISON DU FILTRE RATIONNEL COURANT AU FILTRE RATIONNEL DE REFERENCE | E29 |

↓

| | |
|---|---|
| DETECTION D'UNE ANOMALIE | E30 |

## FIG.6B

30

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2005222747 A1